# EUROPEAN PATENT SPECIFICATION

(11) **EP 4 482 089 B1**
(45) Date of publication and mention of the grant of the patent: **07.10.2026**
(21) Application number: 24183734.3
(22) Date of filing: 21.06.2024
(51) Int. Cl.: H04W 12/122, H04W 76/15, H04W 12/0431, H04W 12/06, H04W 84/12, H04L 9/40, H04W 52/02

(54) **MECHANISM FOR PREVENTING BUFFERED FRAME ATTACK**
MECHANISMUS ZUR VERHINDERUNG EINES GEPUFFERTEN RAHMENANGRIFFS
MÉCANISME POUR EMPÊCHER UNE ATTAQUE DE TRAME TAMPONNÉE

(30) Priority: 21.06.2023 US 202363509492 P
(43) Date of publication of application: 25.12.2024
(73) Proprietor: INTEL Corporation, Santa Clara, CA 95054 (US)
(72) Inventor: BRAVO, Daniel, Portland, OR 97229 (US); OUZIELI, Ido, TA 6382732 Tel Aviv (IL); HUANG, Po-Kai, San Jose, CA 95131 (US); PEER, Ilan, JM 71721 Modiin (IL); ALEXANDER, Danny, Neve Efraim Monoson (IL); BERG, Johannes Martin, NW 32760 Detmold (DE)
(74) Representative: Viering, Jentschura & Partner mbB Patent- und Rechtsanwälte

(56) References cited:
- US-A1- 2021 377 851
- EMILY QI: "IEEE P802", vol. 802.11 - Editorial, 6 April 2023 (2023-04-06), pages 1 - 5805, XP068283733, Retrieved from the Internet <URL:https://ieee-sa.imeetcentral.com/p/aQAAAAAFCQyW> [retrieved on 20230802]
- SCHEPERS DOMIEN ET AL: "Framing Frames: Bypassing Wi-Fi Encryption by Manipulating Transmit Queues", 27 March 2023 (2023-03-27), pages 1 - 16, XP093209514, Retrieved from the Internet <URL:https://papers.mathyvanhoef.com/usenix2023-wifi.pdf> [retrieved on 20240927]

## Description

### CROSS-REFERENCE TO RELATED APPLICATIONS

The present application claims priority to US Provisional Patent Application Ser. No. 63/509,492 filed on June 21, 2023.

### TECHNICAL FIELD

This disclosure generally relates to systems and methods for wireless communications, e.g., such as communications over a wireless local area network (WLAN) in accordance with one or more protocols of the Institute of Electrical and Electronics Engineers (IEEE) 802.11 standard, and, more particularly, to mechanisms for secure connections and prevention of buffered frame attacks.

### BACKGROUND

Wireless devices are becoming widely prevalent and are increasingly requesting access to wireless channels. The Institute of Electrical and Electronics Engineers (IEEE) is developing one or more standards that utilize Orthogonal Frequency-Division Multiple Access (OFDMA) in channel allocation.

IEEE P802.11-REVme™/D3.0, April 2023 is an approved draft of a proposed IEEE Standard relating to Wireless Local Area Network (WLAN) Medium Access Control (MAC) and Physical Layer (PHY) Specifications.

US 2021/0377851 discloses a hibernation mode for multi-link wireless communication networks such as a wireless local area network (WLAN). It describes a hibernation mode, and operations for entering and/or exiting the hibernation mode for multi-link WLAN that can assist the devices in the WLAN (e.g., an access point (AP), a station (STA)) to better utilize channel resources, to save power, and/or to enable virtual STA(s) in the multi-link WLAN.

"Framing Frames: BypassingWi-Fi Encryption by Manipulating Transmit Queues" authored by Domien Schepers et al. is a paper that discusses how wireless access points manage the security context of queued frames and how access points can be tricked into leaking frames in plaintext or encrypted with an attacker's chosen key by exploiting power-save features of the IEEE 802.11 Standard. The paper proposes to delete all frames in the transmission buffer to a device, when the device enter hibernation mode.

### BRIEF DESCRIPTION OF THE DRAWINGS

FIG. 1 is a network diagram illustrating an example network environment for buffered frame attack prevention, in accordance with one or more example embodiments of the present disclosure.
FIG. 2 illustrates a flow diagram of illustrative process for an illustrative secure buffered frame(s) system, in accordance with one or more example embodiments of the present disclosure.
FIG. 3 illustrates a functional diagram of an exemplary communication station that may be suitable for use as a user device, in accordance with one or more example embodiments of the present disclosure.
FIG. 4 illustrates a block diagram of an example machine upon which any of one or more techniques (e.g., methods) may be performed, in accordance with one or more example embodiments of the present disclosure.
FIG. 5 is a block diagram of a radio architecture in accordance with some examples.
FIG. 6 illustrates an example front-end module circuitry for use in the radio architecture of FIG. 5, in accordance with one or more example embodiments of the present disclosure.
FIG. 7 illustrates an example radio IC circuitry for use in the radio architecture of FIG. 5, in accordance with one or more example embodiments of the present disclosure.
FIG. 8 illustrates an example baseband processing circuitry for use in the radio architecture of FIG. 5, in accordance with one or more example embodiments of the present disclosure.
FIG. 9 illustrates an example flow diagram of a secure buffered frame transfer according to some embodiments of the present disclosure.
FIG. 10 illustrates an example flow diagram of a security association system for a secure buffered frame transfer according to some embodiments of the present disclosure.

The above descriptions are for purposes of illustration and are not meant to be limiting. Numerous other examples, configurations, processes, algorithms, etc., may exist, some of which are described in greater detail below. Example embodiments will now be described with reference to the accompanying figures.

### DETAILED DESCRIPTION

The following description and the drawings sufficiently illustrate specific embodiments to enable those skilled in the art to practice them. Other embodiments may incorporate structural, logical, electrical, process, algorithm, and other changes. Portions and features of some embodiments may be included in, or substituted for, those of other embodiments. Embodiments set forth in the claims encompass all available equivalents of those claims.

Example embodiments of the present disclosure relate to systems, methods, and devices for securing buffered frames and preventing attacks on buffered frames.

A recently published paper titled "Framing Frames: Bypassing Wi-Fi Encryption by Manipulating Transmit Queues" identified an attack mechanism on buffered frames of a communication network operating pursuant to the IEEE 802.11 standard (e.g., Wi-Fi network). The basic idea of the attack is based on 3 observations. First, some implementations do not flush buffered frames after association. Second, it is possible to retrieve frames before 4-way handshake is completed. Based on the combination of these two observations, an attacker can first try to disassociate a user/client from an existing connection, then continue with steps to retrieve the buffered frames belonging to the user/client before the user establishes a new connection (e.g., completes another 4-way handshake to negotiate a new key for a new connection). Third, buffered frames can be triggered for transmission or retrieved by an unprotected mechanism today. An attacker can intentionally force buffering of important frames to easily achieve denial-of-service attacks. An attacker can retrieve the buffered frame while real user/client is in power save to easily achieve denial-of-service attack.

The authors of the paper recommend flushing the buffered frames after key deletion caused by disassociation and before a new key is negotiated. However, flushing the buffer after key deletion is not the right condition. There may be events like rekeying that deletes an existing key and introduces a new key. In such cases, buffered frames should not be flushed.

The authors of the paper propose using the security association (SA) Query mechanism which allows an AP device to check an existing association before accepting a new association, as a result, attacker cannot easily disconnect the existing association to accomplish the attack. Further, the authors propose enabling the S1G mechanism to mandate client to wake up before the timeout of the SA Query, so that the SA Query mechanism cannot be bypassed. However, the design of the SA Query timeout is vulnerable to attacks. For example, allowing the SA Query mechanism on the AP device side to go through the timeout procedure can as a result bypass the security check of the AP on the existing association. Moreover, the association come-back time in a (re)association response frame is not protected, so it is possible for an attacker to fake the association response come-back time in the (re)reassociation response frame.

The present disclosure introduces various mechanisms to prevent attacks on buffered frames that overcome the limitations of the solutions provided by the authors of the paper. First, a communication device should flush the buffered frames when the IEEE 802.11 connection state maintained for the peer entity is changed to State 1 or State 2 when power save mode is not feasible anymore. Second, actual data frames should only be delivered after a 4-way handshake by enabling a controlled interface scheme similar to 802.1X controlled port and uncontrolled port to non-802.1X protocols. Third, only data and management frames should use the power management (PM) bit to buffer frames so mechanisms like MAC header protection for data frame and management frame can be used to prevent attacks. A buffered frame attack prevention system may disable the power management (PM) bit in an unprotected authentication frame or unprotected (re)association request/response frame or public action frame, which may be used when the client loses connection state while the AP still thinks there are existing connection state. Along a similar line, buffered frame attack prevention may disable HT-control in in unprotected authentication frame or unprotected (re)association request/response frame or public action frame. In one or more embodiments, a buffered frame attack prevention system may disallow unprotected control/data frame (ex. Ps-Poll/QoS Null) to retrieve buffered frame. In one or more embodiments, a buffered frame attack prevention system may define additional robust management frame to function as Ps-Poll to retrieve buffered frame. Robust management frame means that the management frame can be protected. In one or more embodiments, a buffered frame attack prevention system may facilitate a signaling from the client designed to indicate to AP to disallow unprotected control/data frame (ex. Ps-Poll/QoS Null) to retrieve buffered frame. Fourth, the S1G mechanism should be enabled for non-S1G situations and the association come-back time should be verified in a 4-way handshake, so the client can wake up in due time (appropriate amount of interval) to prevent attack.

The various mechanisms provided in the present disclosure improve prevention of the attacks described in the paper and easy variants thereof. The various mechanisms should be applied in addition to protecting the PM bit in a MAC header of the data and management frame. The scope of protection for the invention is limited by the attached claims.

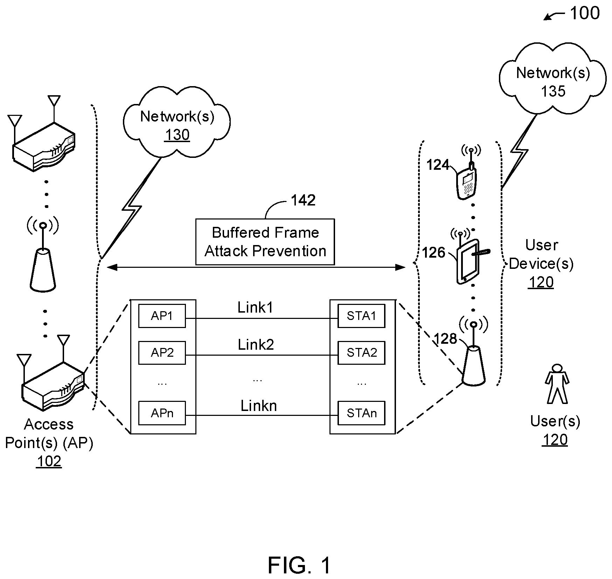

FIG. 1 is a network diagram illustrating an example network environment of buffered frame attack prevention, according to some example embodiments of the present disclosure. Wireless network 100 may include one or more user devices 120 and one or more access points(s) (AP) 102, which may communicate in accordance with IEEE 802.11 communication standards. The user device(s) 120 may be mobile devices that are non-stationary (e.g., not having fixed locations) or may be stationary devices

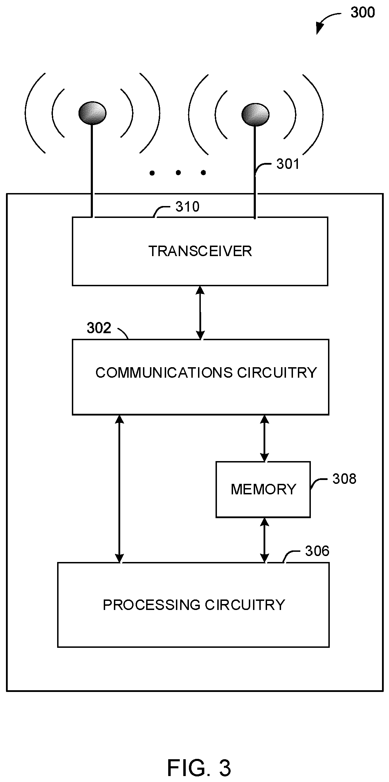

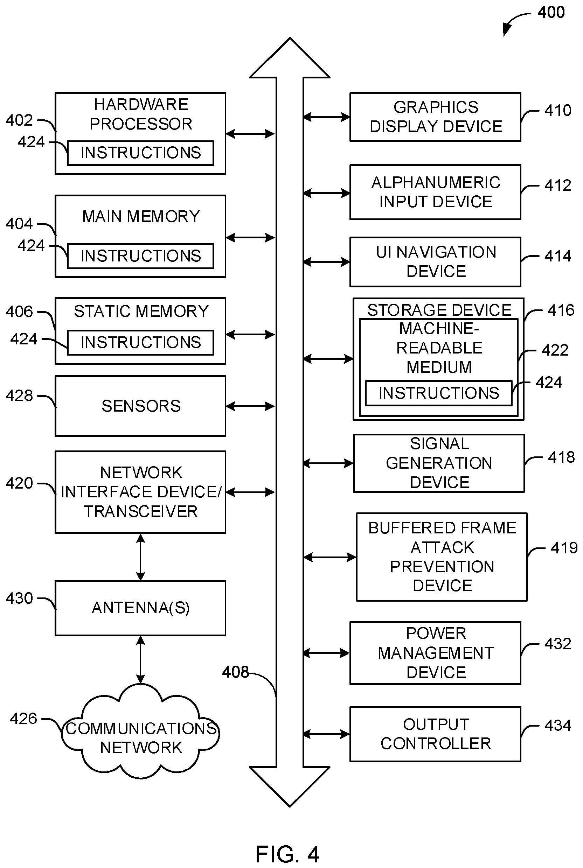

In some embodiments, the user devices 120 and the AP 102 may include one or more computer systems similar to that of the functional diagram of FIG. 3 and/or the example machine/system of FIG. 4.

One or more illustrative user device(s) 120 and/or AP(s) 102 may be operable by one or more user(s) 110. It should be noted that any addressable unit may be a station (STA). An STA may take on multiple distinct characteristics, each of which shape its function. For example, a single addressable unit might simultaneously be a portable STA, a quality-of-service (QoS) STA, a dependent STA, and a hidden STA. The one or more illustrative user device(s) 120 and the AP(s) 102 may be STAs. The one or more illustrative user device(s) 120 and/or AP(s) 102 may operate as a personal basic service set (PBSS) control point/access point (PCP/AP). The user device(s) 120 (e.g., 124, 126, or 128) and/or AP(s) 102 may include any suitable processor-driven device including, but not limited to, a mobile device or a non-mobile, e.g., a static device. For example, user device(s) 120 and/or AP(s) 102 may include, a user equipment (UE), a station (STA), an access point (AP), a software enabled AP (SoftAP), a personal computer (PC), a wearable wireless device (e.g., bracelet, watch, glasses, ring, etc.), a desktop computer, a mobile computer, a laptop computer, an ultrabook^{™} computer, a notebook computer, a tablet computer, a server computer, a handheld computer, a handheld device, an internet of things (IoT) device, a sensor device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "carry small live large" (CSLL) device, an ultra mobile device (UMD), an ultra mobile PC (UMPC), a mobile internet device (MID), an "origami" device or computing device, a device that supports dynamically composable computing (DCC), a context-aware device, a video device, an audio device, an A/V device, a set-top-box (STB), a blu-ray disc (BD) player, a BD recorder, a digital video disc (DVD) player, a high definition (HD) DVD player, a DVD recorder, a HD DVD recorder, a personal video recorder (PVR), a broadcast HD receiver, a video source, an audio source, a video sink, an audio sink, a stereo tuner, a broadcast radio receiver, a flat panel display, a personal media player (PMP), a digital video camera (DVC), a digital audio player, a speaker, an audio receiver, an audio amplifier, a gaming device, a data source, a data sink, a digital still camera (DSC), a media player, a smartphone, a television, a music player, or the like. Other devices, including smart devices such as lamps, climate control, car components, household components, appliances, etc. may also be included in this list.

As used herein, the term "Internet of Things (IoT) device" is used to refer to any object (e.g., an appliance, a sensor, etc.) that has an addressable interface (e.g., an Internet protocol (IP) address, a Bluetooth identifier (ID), a near-field communication (NFC) ID, etc.) and can transmit information to one or more other devices over a wired or wireless connection. An IoT device may have a passive communication interface, such as a quick response (QR) code, a radio-frequency identification (RFID) tag, an NFC tag, or the like, or an active communication interface, such as a modem, a transceiver, a transmitter-receiver, or the like. An IoT device can have a particular set of attributes (e.g., a device state or status, such as whether the IoT device is on or off, open or closed, idle or active, available for task execution or busy, and so on, a cooling or heating function, an environmental monitoring or recording function, a light-emitting function, a sound-emitting function, etc.) that can be embedded in and/or controlled/monitored by a central processing unit (CPU), microprocessor, ASIC, or the like, and configured for connection to an IoT network such as a local ad-hoc network or the Internet. For example, IoT devices may include, but are not limited to, refrigerators, toasters, ovens, microwaves, freezers, dishwashers, dishes, hand tools, clothes washers, clothes dryers, furnaces, air conditioners, thermostats, televisions, light fixtures, vacuum cleaners, sprinklers, electricity meters, gas meters, etc., so long as the devices are equipped with an addressable communications interface for communicating with the IoT network. IoT devices may also include cell phones, desktop computers, laptop computers, tablet computers, personal digital assistants (PDAs), etc. Accordingly, the IoT network may be comprised of a combination of "legacy" Internet-accessible devices (e.g., laptop or desktop computers, cell phones, etc.) in addition to devices that do not typically have Internet-connectivity (e.g., dishwashers, etc.).

The user device(s) 120 and/or AP(s) 102 may also include mesh stations in, for example, a mesh network, in accordance with one or more IEEE 802.11 standards and/or 3GPP standards.

Any of the user device(s) 120 (e.g., user devices 124, 126, 128), and AP(s) 102 may be configured to communicate with each other via one or more communications networks 130 and/or 135 wirelessly or wired. The user device(s) 120 may also communicate peer-to-peer or directly with each other with or without the AP(s) 102. Any of the communications networks 130 and/or 135 may include, but not limited to, any one of a combination of different types of suitable communications networks such as, for example, broadcasting networks, cable networks, public networks (e.g., the Internet), private networks, wireless networks, cellular networks, or any other suitable private and/or public networks. Further, any of the communications networks 130 and/or 135 may have any suitable communication range associated therewith and may include, for example, global networks (e.g., the Internet), metropolitan area networks (MANs), wide area networks (WANs), local area networks (LANs), or personal area networks (PANs). In addition, any of the communications networks 130 and/or 135 may include any type of medium over which network traffic may be carried including, but not limited to, coaxial cable, twisted-pair wire, optical fiber, a hybrid fiber coaxial (HFC) medium, microwave terrestrial transceivers, radio frequency communication mediums, white space communication mediums, ultra-high frequency communication mediums, satellite communication mediums, or any combination thereof.

Any of the user device(s) 120 (e.g., user devices 124, 126, 128) and AP(s) 102 may include one or more communications antennas. The one or more communications antennas may be any suitable type of antennas corresponding to the communications protocols used by the user device(s) 120 (e.g., user devices 124, 126 and 128), and AP(s) 102. Some non-limiting examples of suitable communications antennas include Wi-Fi antennas, Institute of Electrical and Electronics Engineers (IEEE) 802.11 family of standards compatible antennas, directional antennas, non-directional antennas, dipole antennas, folded dipole antennas, patch antennas, multiple-input multiple-output (MIMO) antennas, omnidirectional antennas, quasi-omnidirectional antennas, or the like. The one or more communications antennas may be communicatively coupled to a radio component to transmit and/or receive signals, such as communications signals to and/or from the user devices 120 and/or AP(s) 102.

Any of the user device(s) 120 (e.g., user devices 124, 126, 128), and AP(s) 102 may be configured to perform directional transmission and/or directional reception in conjunction with wirelessly communicating in a wireless network. Any of the user device(s) 120 (e.g., user devices 124, 126, 128), and AP(s) 102 may be configured to perform such directional transmission and/or reception using a set of multiple antenna arrays (e.g., DMG antenna arrays or the like). Each of the multiple antenna arrays may be used for transmission and/or reception in a particular respective direction or range of directions. Any of the user device(s) 120 (e.g., user devices 124, 126, 128), and AP(s) 102 may be configured to perform any given directional transmission towards one or more defined transmit sectors. Any of the user device(s) 120 (e.g., user devices 124, 126, 128), and AP(s) 102 may be configured to perform any given directional reception from one or more defined receive sectors.

MIMO beamforming in a wireless network may be accomplished using RF beamforming and/or digital beamforming. In some embodiments, in performing a given MIMO transmission, user devices 120 and/or AP(s) 102 may be configured to use all or a subset of its one or more communications antennas to perform MIMO beamforming.

Any of the user devices 120 (e.g., user devices 124, 126, 128), and AP(s) 102 may include any suitable radio and/or transceiver for transmitting and/or receiving radio frequency (RF) signals in the bandwidth and/or channels corresponding to the communications protocols utilized by any of the user device(s) 120 and AP(s) 102 to communicate with each other. The radio components may include hardware and/or software to modulate and/or demodulate communications signals according to pre-established transmission protocols. The radio components may further have hardware and/or software instructions to communicate via one or more Wi-Fi and/or Wi-Fi direct protocols, as standardized by the Institute of Electrical and Electronics Engineers (IEEE) 802.11 standards. In certain example embodiments, the radio component, in cooperation with the communications antennas, may be configured to communicate via 2.4 GHz channels (e.g. 802.11b, 802.11g, 802.11n, 802.11ax), 5 GHz channels (e.g. 802.11n, 802.11ac, 802.11ax, 802.11be, etc.), 6 GHz channels (e.g., 802.11ax, 802.11be, etc.), or 60 GHZ channels (e.g. 802.11ad, 802.11ay). 800 MHz channels (e.g. 802.11ah). The communications antennas may operate at 28 GHz and 40 GHz. It should be understood that this list of communication channels in accordance with certain 802.11 standards is only a partial list and that other 802.11 standards may be used (e.g., Next Generation Wi-Fi, or other standards). In some embodiments, non-Wi-Fi protocols may be used for communications between devices, such as Bluetooth, dedicated short-range communication (DSRC), Ultra-High Frequency (UHF) (e.g. IEEE 802.11af, IEEE 802.22), white band frequency (e.g., white spaces), or other packetized radio communications. The radio component may include any known receiver and baseband suitable for communicating via the communications protocols. The radio component may further include a low noise amplifier (LNA), additional signal amplifiers, an analog-to-digital (A/D) converter, one or more buffers, and digital baseband.

The IEEE 802.11 standard also provides a framework to allow connection of multiple links while connecting to a network. In one embodiment, and with reference to FIG. 1, a user device 120 may be in communication with one or more APs 102. For example, one or more APs 102 may implement a buffered frame attack prevention 142 with one or more user devices 120. The one or more APs 102 may be multi-link devices (MLDs) and the one or more user device 120 may be non-AP MLDs. Each of the one or more APs 102 may comprise a plurality of individual APs (e.g., AP1, AP2, ..., APn, where n is an integer) and each of the one or more user devices 120 may comprise a plurality of individual STAs (e.g., STA1, STA2, ..., STAn). The AP MLDs and the non-AP MLDs may setup one or more links (e.g., Link1, Link2, ..., Linkn) between each of the individual APs and STAs. It is understood that the above descriptions are for purposes of illustration and are not meant to be limiting.

There are two multi-link devices on either side which includes multiple STAs that can setup link with each other. An overview of MLDs according to the IEEE standard is briefly provided below.

Multi-link device (MLD): A logical entity that contains one or more STAs. The logical entity has one MAC data service interface and primitives to the LLC and a single address associated with the interface, which can be used to communicate on the DSM.

A Multi-link device allows STAs within the multi-link logical entity to have the same MAC address.

The exact name can be changed.

For infrastructure framework, there is Multi-link AP device, which includes APs on one side, and Multi-link non-AP device, which includes non-APs on the other side. The detailed definition is shown below.

Multi-link AP device: A multi-link device, where each STA within the multi-link device is an AP.

Multi-link non-AP device: A multi-link device, where each STA within the multi-link device is a non-AP STA.

This framework is a natural extension from the one link operation between two STAs, which are AP and non-AP STA under the infrastructure framework.

A secure connection between a client (or peer device or STA) and an access point (AP) device may be established using a 4-handshake for one link or multilink connections according to some embodiments of the present disclosure. The 4-way handshake is provided in addition to the authentication and association processes according to the IEEE 802.11 standard. An overview of the authentication and association protocol according to the IEEE standard is briefly provided below.
0. Beacons: The access point periodically sends a beacon frame to announce its presence and provides information that is required by the stations to connect to the wireless network.
1. Probe Request: A station sends probe e requests to discover 802.11 networks within its proximity. Probe requests advertise the stations supported data rates (e.g., maximum PHY rate) and 802.11 capabilities.
2. Probe Response: An access point receiving the probe request checks to see if the station has at least one common supported data rate. If they share a common data rate, a probe response is sent advertising the SSID, supported data rates, encryption types if required, and other 802.11 capabilities of the access point.
3. Authentication Request: The station chooses a SSID/network from the probe responses it receives. It also checks the compatibility on encryption type. Once compatible networks are discovered the station will attempt low-level 802.11 authentication with compatible access points. The station sends a low-level 802.11 authentication frame to an AP setting the authentication to open and the sequence to 0x0001.
4. Authentication Response: The access point receives the authentication frame and responds to the station with authentication frame set to open indicating a sequence. If an access point receives any frame other than an authentication or probe request from a station that is not authenticated it will respond with a deauthentication frame placing the mobile into an unauthenticated an unassociated state. The station will have to begin the association process from the low level authentication step. At this point the station is authenticated but not yet associated.
5. Association Request: Once the station determines which access point it would like to associate to, it will send an association request to that access point. The association request contains chosen encryption types and other compatible 802.11 capabilities.
6. Association Response: If the elements of association request match the capabilities of the access point, it will create an Association ID for the mobile station and respond with an association response with a success message granting network access to the mobile station.

Currently, at this stage the connection is established and the station is successfully associated to the access point and is ready for data transfer. However, data transfer may not be secure and is vulnerable to attacks.

In some embodiments, to prevent attacks on buffered frames the present application provides a 4-way handshake. A secure connection may further be provided with a 4-way handshake. For example, a 4-way handshake such as one established by IEEE-802.11i may be used a network authentication protocol. The process includes exchanging 4 messages between an access point and the client device to generate some encryption keys which can be used to encrypt actual data sent over the wireless medium. The handshake is used to encrypt all communications with the access point. The protocol allows an authenticator and a wireless client to establish an encrypted connection without having to reveal the pass key to each other.

The 4-way handshake may occur after the association response. Alternatively, the 4-way handshake may occur concurrently with one or more of the authentication request/response frames and association request/response frames.

A device begins at State 1 and can transition to the following connection states:
State 1: STA is unauthenticated and unassociated and unsecured
State 2: STA is authenticated but unassociated and unsecured
State 3: STA is authenticated and associated but unsecured
State 4: STA is authenticated and associated and secure (e.g., after key exchange)

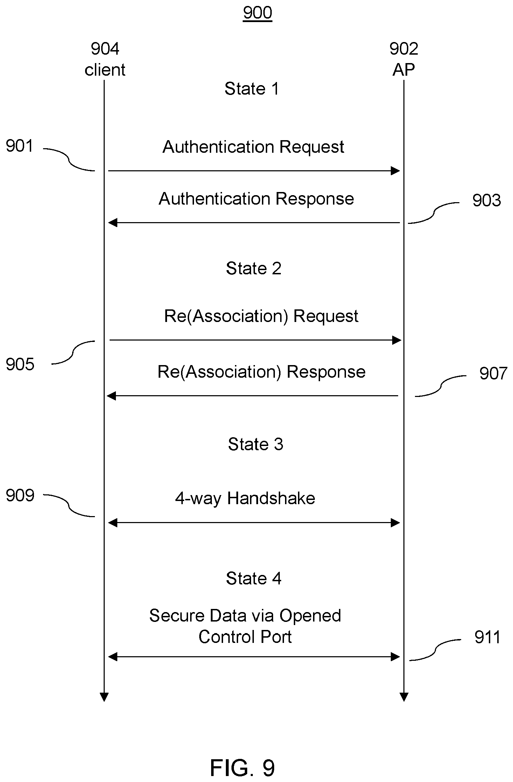

FIG. 9 illustrates an example flow diagram 900 of a secure buffered frame transfer according to some embodiments of the present disclosure. At 901, a client (e.g., non-AP or peer) may transmit an authentication request frame and a non-client (e.g., AP) may receive the authentication request frame. At 903, the non-client (e.g., AP) may transmit an authentication response frame and the client (e.g., non-AP) may receive the authentication response frame. At 905, the client (e.g., non-AP) may transmit an association/reassociation request frame and the non-client may receive the association/reassociation request frame. At 907, the non-client (e.g., AP) may transmit an association/reassociation response frame and the client may receive the association/reassociation response frame. At 909, the client and AP may engage in a 4-way handshake to exchange security keys. At 911, the AP may open a controlled port for secure data transfer (including buffered frames) between the client and the AP.

After establishing a secure connection, a security association (SA) Query Request/Response mechanism may be used to determine if the connection is still secure. A SA Query may be used to determine if an Association Request has come from a genuine client or from an attacker. The AP may want to check if the real client still exists or if it has received a fake association request from an attacker. The AP sends a SA Query Request to the client with an encrypted transaction ID. A valid SA Query Response from the client will contain the same encrypted transaction ID. This confirms a disassociation. If a deassociation is confirmed, the AP knows that it is a genuine (re)Association Request.

Buffered frames should be flushed when a state maintained for the peer entity is changed to State 1 or State 2 when power save mode is not feasible anymore. This facilitates support for a rekeying mechanism.

Buffered data and management frame must be flushed whenever the connection state of the peer entity changes to State 1 or State 2. That is, all the buffered frames to the peer entity must be removed. When the peer entity is a multilink device (MLD), all the buffered frames for each setup link must be removed as well. This is needed to prevent attacks on a management frame that is intended for a specific setup link.

To provide more secure communication, actual data frames may only be delivered after a 4-way handshake and data flow is moved to a controlled port. That is, the flow of frames for protocol exchange before buffered frame attack prevention is only through an uncontrolled port and the flow of frames for actual data is only through a controlled port after buffered frame attack prevention. Data communication is not allowed before a successful 4-way handshake is completed.

For example, a MAC service data unit (MSDU) should be disallowed when the MSDU is not an extensible authentication protocol over LAN (EAPOL) protocol data unit (PDU) under robust security network association (RSNA) and the 4-way handshake is not complete. This can be realized by mandating 802.1X controlled port and uncontrolled port mechanism for authentication methods that are not 802.1X. Alternatively, this can also be realized by mandating that in RSNA, disallow MSDU that is not EAPOL PDU before entering State 4.

To provide a protected power management (PM) bit, only data and management frames are permitted to use the PM bit to buffer frames, so mechanisms like MAC header protection for data frame and management frame can be used to protect the PM bit. The PM bit in an unprotected authentication frame or unprotected (re)association request/response frame or public action frame should be disabled or ignored, since these frames may still be used when the client loses connection state while the AP still thinks there is an existing connection state. Similarly, HT-control in an unprotected authentication frame or unprotected (re)association request/response frame or public action frame should also be disabled or ignored. Additionally, unprotected control/data frame (e.g., Ps-Poll/QoS Null) should not be allowed to retrieve buffered frames. Rather, an additional robust management frame may be defined to function as Ps-Poll to retrieve buffered frames. Robust management frame means that the management frame can be protected. Additionally, or alternatively, a signaling from the client may be defined to indicate to the AP to disallow unprotected control/data frame (e.g., Ps-Poll/QoS Null) to retrieve buffered frame.

In particular, firstly, the PM bit used for changing power management modes shall not be used unless it is a frame exchange including a management frame, extension frame or data frame from the STA, and an Ack or a BlockAck frame from the AP. Specifically, to change power management modes a STA shall inform the AP by completing a successful frame exchange that is initiated by the STA. This frame exchange sequence shall include a management frame, extension frame or data frame from the STA, and an Ack or a BlockAck frame from the AP. Otherwise, this frame exchange shall not be used to change power management modes.

Secondly, the PM bit is disallowed or ignored in unprotected authentication frame, disauthentication frames, probe request/response frames, (re)association request/response frames, disassociation frames and public action frames. As an enhancement, disallow HT control if these frames are not protected. The reason for this is that these frames may be used when the client loses connection (say to State 1 and State 2) and the AP still maintains connection (state 4). Currently, in such situation, the client may send these frames to the AP, and the AP will process the PM bit but cannot determine if the frames are from a real client that lost connection or a fake client. Here, "unprotected" means the frames are not protected by a message integrity code (MIC) mechanism like a broadcast integrity protocol (BIP) and/or a framebody encryption mechanism like CCMP/GCMP or MAC header protection. As an alternative, "unprotected" may also mean the frames are not protected with MAC header protection.

Thirdly, disallow unprotected frame that can be used to retrieve buffered frames. For example, unprotected frames that can be used to retrieve buffered frames include a Ps-Poll frame without MAC header protection, QoS Null frame without MAC header protection, QoS Data frame without MAC header protection or frame body protection. Additionally, or alternatively, a signaling from a STA can indicate whether unprotected frame that can be used to retrieve buffered frames is disabled. A protected action frame can be defined for this purpose. For example, in some embodiments a buffered frame attack prevention system may define a robust management frame for non-S1G that has the same functionality as a Ps-Poll frame below, by replacing "Ps-Poll" in the rules with "Management Ps-Poll". Operations defined in the following related to non-S1G Ps-Poll 10.3.2.11, 10.2.3.3, 11.2.3.1, 11.2.3.6-8, 11.21.13, 26.4, 26.8. In one or more embodiments, a buffered frame attack prevention system may define a robust management frame for non-S1G that has the same functionality as Ps-Poll frame below, by replacing "Ps-Poll" in the rules with "Management Ps-Poll."

Operations defined in the following related to non-S1G Ps-Poll:
10.3.2.11 Acknowledgment procedure
10.3.4.4 Recovery procedures and retransmit limits
11.2.3.1 General
11.2.3.6 AP operation
11.2.3.7 Receive operation for STAs in PS mode
11.2.3.8 Receive operation using APSD
11.21.13 BSS max idle period management
26.4 HE acknowledgment procedure
26.8 TWT operation

Finally, a buffered frame attack prevention system may facilitate that the client will not sleep longer than the time out of an SA Query. When the SA Query mechanism is used, a client entering into a power save mode needs to wake up in time to respond to the SA Query. To provide a protected wake time, the S1G mechanism may be enabled for non-S1G and the association come-back time should be exchanged in a 4-way handshake should be verified so the client can wake up in a correct amount of interval to prevent attacks.

The client should not sleep longer than the time out of an SA Query. First, the following rules are provided for non-S1G STA. When an non-S1G STA in a power save mode wakes up with an interval longer than dot11AssociationSAQueryMaximumTimeout, an existing SA can be destroyed. So, to maintain its valid SA status, the non-S1G STA should wake to listen to SA Query Request frame with the interval specified by dot11AssociationSAQueryMaximumTimeout. When dot11RSNAProtectedManagementFramesActivated is true, an non-S1G AP should provide the timeout interval (association comeback time, which is set to dot11AssociationSAQueryMaximumTimeout) in an Association Response frame and Reassociation Response frame with a status code 0 to the non-S1G STA. When a non-AP MLD in a power save mode for all links wakes up with an interval longer than dot11AssociationSAQueryMaximumTimeout, an existing SA can be destroyed. So, to maintain its valid SA status, the non-AP MLD should/shall wake up in at least one of the setup link to listen to SA Query Request frame with the interval specified by dot11AssociationSAQueryMaximumTimeout. When dot11RSNAProtectedManagementFramesActivated is true, an AP MLD should/shall provide the timeout interval (association comeback time, which is set to dot11AssociationSAQueryMaximumTimeout) in an Association Response frame and Reassociation Response frame with a status code 0 to the non-AP MLD. If the non-S1G AP or AP MLD does not provide the timeout interval, then the non-S1G STA or non-AP MLD shall wake up with an interval set to the default value of dot11AssociationSAQueryMaximumTimeout. Then have the following rules to verify the timeout interval provided in a (re)association response. Define a new Association SA Query Maximum Timeout KDE to indicate the time out of SA Query Non-AP STA or non-AP MLD includes the KDE in message 2 of 4-way handshake if association timeout is provided in (re)association response. The AP or AP MLD verifies the value is the same as the value indicated in the (re)association response. A 4-way handshake fails, if verification fails. AP or AP MLD includes the KDE in message 3 of a 4-way handshake. A non-AP or non-AP MLD verifies the value is the same as the value indicated in the (re)association response. A 4-way handshake fails, if verification fails.

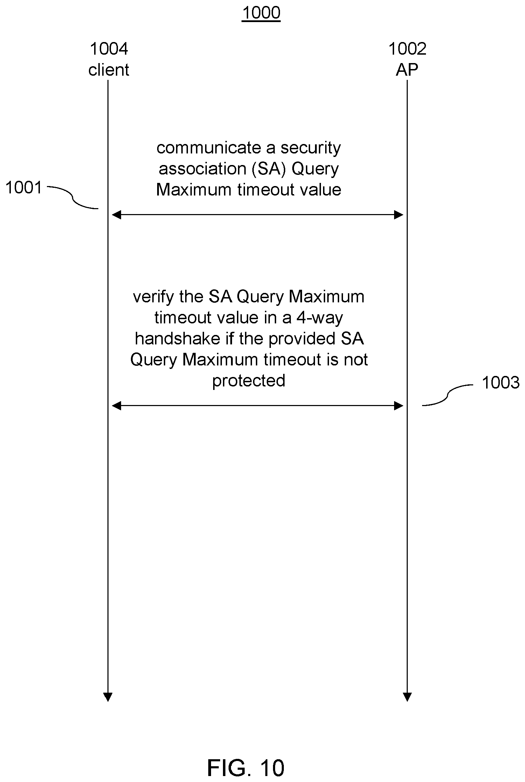

FIG. 10 illustrates an example flow diagram of a security association system 1000 for a secure buffered frame transfer according to some embodiments of the present disclosure. At 1001, a client (e.g., non-AP or peer) and a non-client (e.g., AP) may communicate a security association (SA) Query Maximum timeout value. At 1003, the client (e.g., non-AP or peer) and the non-client (e.g., AP) may, if the SA Query Maximum timeout value is communicated in an unprotected frame, verify the SA Query Maximum timeout value in a 4-way handshake or keys derived thereof.

It is understood that the above descriptions are for purposes of illustration and are not meant to be limiting.

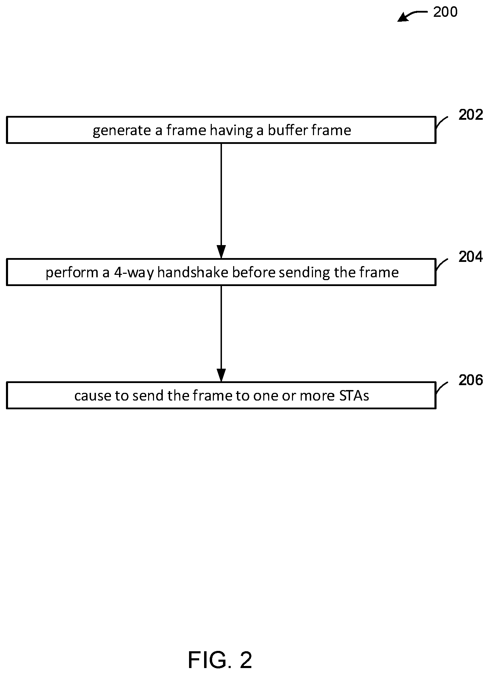

FIG. 2 illustrates a flow diagram of illustrative process 200 for a buffered frame attack prevention system, in accordance with one or more example embodiments of the present disclosure.

At block 202, a device (e.g., the user device(s) 120 and/or the AP 102 of FIG. 1 and/or the buffered frame attack prevention device 419 of FIG. 4) may generate a frame having a buffer frame.

At block 204, the device may perform a 4-way handshake before sending the frame.

At block 206, the device may cause to send the frame to one or more STAs.

For example, the device may communicate frames via an uncontrolled interface for authentication, association, and key negotiation. Then the device may communicate data frames via a controlled interface after a successful key negotiation, wherein the controlled interface may be blocked prior to the successful key negotiation.

The peer device may communicate a power-mode indication that the peer device is entering a power-save mode and causing data frames to the peer device to be buffered. For example, a client may send a power-mode indication that the peer device is entering a power-save mode and an AP may receive the power-mode indication and buffer frames to the peer in response. However, the AP may ignore or disable a power-mode indication in an unprotected frame. The AP may ignore the power-mode indication included in an unprotected authentication frame, unprotected re(association) request frame, unprotected re(association) response frame and public action frame. The AP may only determine the power-mode indication in a protected frame, wherein the protected frame includes a frame with a message integrity code (MIC), MAC header encryption, or framebody encryption. That is, the peer device should send the power-mode indication in a protected frame. Additionally, the AP may delete the buffered data frames for the peer device when a connection state of the peer device transitions to State 1 or State 2, wherein State 1: STA is unauthenticated and unassociated and unsecured; State 2: STA is authenticated but unassociated and unsecured; State 3: STA is authenticated and associated but unsecured; and State 4: STA is authenticated and associated and secure. the device may communicate the buffered data frames only via the controlled interface.

For example, an AP may ignore a buffer retrieval request included in an unprotected frame (e.g., unprotected management frame or unprotected data frame); and only transmit the buffered data frames when a protected frame (e.g., protected management frame or protected data frame) including a protected buffer retrieval request is sent by the peer device and received by the AP. Additionally, when the SA Quesy mechanism is used, if a security association (SA) Query Maximum timeout value (e.g., so that the peer device can set the wake-up time to be less than the SA Query Maximum timeout value) is communicated in an unprotected frame, it should be verified (e.g., via 4-way handshake or keys generated thereof).

It is understood that the above descriptions are for purposes of illustration and are not meant to be limiting.

FIG. 3 shows a functional diagram of an exemplary communication station 300, in accordance with one or more example embodiments of the present disclosure. In one embodiment, FIG. 3 illustrates a functional block diagram of a communication station that may be suitable for use as an AP 102 (FIG. 1) or a user device 120 (FIG. 1) in accordance with some embodiments. The communication station 300 may also be suitable for use as a handheld device, a mobile device, a cellular telephone, a smartphone, a tablet, a netbook, a wireless terminal, a laptop computer, a wearable computer device, a femtocell, a high data rate (HDR) subscriber station, an access point, an access terminal, or other personal communication system (PCS) device.

The communication station 300 may include communications circuitry 302 and a transceiver 310 for transmitting and receiving signals to and from other communication stations using one or more antennas 301. The communications circuitry 302 may include circuitry that can operate the physical layer (PHY) communications and/or medium access control (MAC) communications for controlling access to the wireless medium, and/or any other communications layers for transmitting and receiving signals. The communication station 300 may also include processing circuitry 306 and memory 308 arranged to perform the operations described herein. In some embodiments, the communications circuitry 302 and the processing circuitry 306 may be configured to perform operations detailed in the above figures, diagrams, and flows.

In accordance with some embodiments, the communications circuitry 302 may be arranged to contend for a wireless medium and configure frames or packets for communicating over the wireless medium. The communications circuitry 302 may be arranged to transmit and receive signals. The communications circuitry 302 may also include circuitry for modulation/demodulation, upconversion/downconversion, filtering, amplification, etc. In some embodiments, the processing circuitry 306 of the communication station 300 may include one or more processors. In other embodiments, two or more antennas 301 may be coupled to the communications circuitry 302 arranged for sending and receiving signals. The memory 308 may store information for configuring the processing circuitry 306 to perform operations for configuring and transmitting message frames and performing the various operations described herein. The memory 308 may include any type of memory, including non-transitory memory, for storing information in a form readable by a machine (e.g., a computer). For example, the memory 308 may include a computer-readable storage device, read-only memory (ROM), random-access memory (RAM), magnetic disk storage media, optical storage media, flash-memory devices and other storage devices and media.

In some embodiments, the communication station 300 may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), a wearable computer device, or another device that may receive and/or transmit information wirelessly.

In some embodiments, the communication station 300 may include one or more antennas 301. The antennas 301 may include one or more directional or omnidirectional antennas, including, for example, dipole antennas, monopole antennas, patch antennas, loop antennas, microstrip antennas, or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated for spatial diversity and the different channel characteristics that may result between each of the antennas and the antennas of a transmitting station.

In some embodiments, the communication station 300 may include one or more of a keyboard, a display, a non-volatile memory port, multiple antennas, a graphics processor, an application processor, speakers, and other mobile device elements. The display may be an LCD screen including a touch screen.

Although the communication station 300 is illustrated as having several separate functional elements, two or more of the functional elements may be combined and may be implemented by combinations of software-configured elements, such as processing elements including digital signal processors (DSPs), and/or other hardware elements. For example, some elements may include one or more microprocessors, DSPs, field- programmable gate arrays (FPGAs), application specific integrated circuits (ASICs), radio- frequency integrated circuits (RFICs) and combinations of various hardware and logic circuitry for performing at least the functions described herein. In some embodiments, the functional elements of the communication station 300 may refer to one or more processes operating on one or more processing elements.

Certain embodiments may be implemented in one or a combination of hardware, firmware, and software. Other embodiments may also be implemented as instructions stored on a computer-readable storage device, which may be read and executed by at least one processor to perform the operations described herein. A computer-readable storage device may include any non-transitory memory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. In some embodiments, the communication station 300 may include one or more processors and may be configured with instructions stored on a computer-readable storage device.

FIG. 4 illustrates a block diagram of an example of a machine 400 or system upon which any one or more of the techniques (e.g., methodologies) discussed herein may be performed. In other embodiments, the machine 400 may operate as a standalone device or may be connected (e.g., networked) to other machines. In a networked deployment, the machine 400 may operate in the capacity of a server machine, a client machine, or both in server-client network environments. In an example, the machine 400 may act as a peer machine in peer-to-peer (P2P) (or other distributed) network environments. The machine 400 may be a personal computer (PC), a tablet PC, a set-top box (STB), a personal digital assistant (PDA), a mobile telephone, a wearable computer device, a web appliance, a network router, a switch or bridge, or any machine capable of executing instructions (sequential or otherwise) that specify actions to be taken by that machine, such as a base station. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), or other computer cluster configurations.

Examples, as described herein, may include or may operate on logic or a number of components, modules, or mechanisms. Modules are tangible entities (e.g., hardware) capable of performing specified operations when operating. A module includes hardware. In an example, the hardware may be specifically configured to carry out a specific operation (e.g., hardwired). In another example, the hardware may include configurable execution units (e.g., transistors, circuits, etc.) and a computer readable medium containing instructions where the instructions configure the execution units to carry out a specific operation when in operation. The configuring may occur under the direction of the executions units or a loading mechanism. Accordingly, the execution units are communicatively coupled to the computer-readable medium when the device is operating. In this example, the execution units may be a member of more than one module. For example, under operation, the execution units may be configured by a first set of instructions to implement a first module at one point in time and reconfigured by a second set of instructions to implement a second module at a second point in time.

The machine (e.g., computer system) 400 may include a hardware processor 402 (e.g., a central processing unit (CPU), a graphics processing unit (GPU), a hardware processor core, or any combination thereof), a main memory 404 and a static memory 406, some or all of which may communicate with each other via an interlink (e.g., bus) 408. The machine 400 may further include a power management device 432, a graphics display device 410, an alphanumeric input device 412 (e.g., a keyboard), and a user interface (UI) navigation device 414 (e.g., a mouse). In an example, the graphics display device 410, alphanumeric input device 412, and UI navigation device 414 may be a touch screen display. The machine 400 may additionally include a storage device (i.e., drive unit) 416, a signal generation device 418 (e.g., a speaker), a buffered frame attack prevention device 419, a network interface device/transceiver 420 coupled to antenna(s) 430, and one or more sensors 428, such as a global positioning system (GPS) sensor, a compass, an accelerometer, or other sensor. The machine 400 may include an output controller 434, such as a serial (e.g., universal serial bus (USB), parallel, or other wired or wireless (e.g., infrared (IR), near field communication (NFC), etc.) connection to communicate with or control one or more peripheral devices (e.g., a printer, a card reader, etc.)). The operations in accordance with one or more example embodiments of the present disclosure may be carried out by a baseband processor. The baseband processor may be configured to generate corresponding baseband signals. The baseband processor may further include physical layer (PHY) and medium access control layer (MAC) circuitry, and may further interface with the hardware processor 402 for generation and processing of the baseband signals and for controlling operations of the main memory 404, the storage device 416, and/or the secure buffered frame(s) device 419. The baseband processor may be provided on a single radio card, a single chip, or an integrated circuit (IC).

The storage device 416 may include a machine readable medium 422 on which is stored one or more sets of data structures or instructions 424 (e.g., software) embodying or utilized by any one or more of the techniques or functions described herein. The instructions 424 may also reside, completely or at least partially, within the main memory 404, within the static memory 406, or within the hardware processor 402 during execution thereof by the machine 400. In an example, one or any combination of the hardware processor 402, the main memory 404, the static memory 406, or the storage device 416 may constitute machine-readable media.

The buffered frame attack prevention device 419 may carry out or perform any of the operations and processes (e.g., process 200) described and shown above.

It is understood that the above are only a subset of what the buffered frame attack prevention device 419 may be configured to perform and that other functions included throughout this disclosure may also be performed by the buffered frame attack prevention device 419.

While the machine-readable medium 422 is illustrated as a single medium, the term "machine-readable medium" may include a single medium or multiple media (e.g., a centralized or distributed database, and/or associated caches and servers) configured to store the one or more instructions 424.

Various embodiments may be implemented fully or partially in software and/or firmware. This software and/or firmware may take the form of instructions contained in or on a non-transitory computer-readable storage medium. Those instructions may then be read and executed by one or more processors to enable performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read only memory (ROM); random access memory (RAM); magnetic disk storage media; optical storage media; a flash memory, etc.

The term "machine-readable medium" may include any medium that is capable of storing, encoding, or carrying instructions for execution by the machine 400 and that cause the machine 400 to perform any one or more of the techniques of the present disclosure, or that is capable of storing, encoding, or carrying data structures used by or associated with such instructions. Non-limiting machine-readable medium examples may include solid-state memories and optical and magnetic media. In an example, a massed machine-readable medium includes a machine-readable medium with a plurality of particles having resting mass. Specific examples of massed machine-readable media may include non-volatile memory, such as semiconductor memory devices (e.g., electrically programmable read-only memory (EPROM), or electrically erasable programmable read-only memory (EEPROM)) and flash memory devices; magnetic disks, such as internal hard disks and removable disks; magneto-optical disks; and CD-ROM and DVD-ROM disks.

The instructions 424 may further be transmitted or received over a communications network 426 using a transmission medium via the network interface device/transceiver 420 utilizing any one of a number of transfer protocols (e.g., frame relay, internet protocol (IP), transmission control protocol (TCP), user datagram protocol (UDP), hypertext transfer protocol (HTTP), etc.). Example communications networks may include a local area network (LAN), a wide area network (WAN), a packet data network (e.g., the Internet), mobile telephone networks (e.g., cellular networks), plain old telephone (POTS) networks, wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, and peer-to-peer (P2P) networks, among others. In an example, the network interface device/transceiver 420 may include one or more physical jacks (e.g., Ethernet, coaxial, or phone jacks) or one or more antennas to connect to the communications network 426. In an example, the network interface device/transceiver 420 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding, or carrying instructions for execution by the machine 400 and includes digital or analog communications signals or other intangible media to facilitate communication of such software.

The operations and processes described and shown above may be carried out or performed in any suitable order as desired in various implementations. Additionally, in certain implementations, at least a portion of the operations may be carried out in parallel. Furthermore, in certain implementations, less than or more than the operations described may be performed.

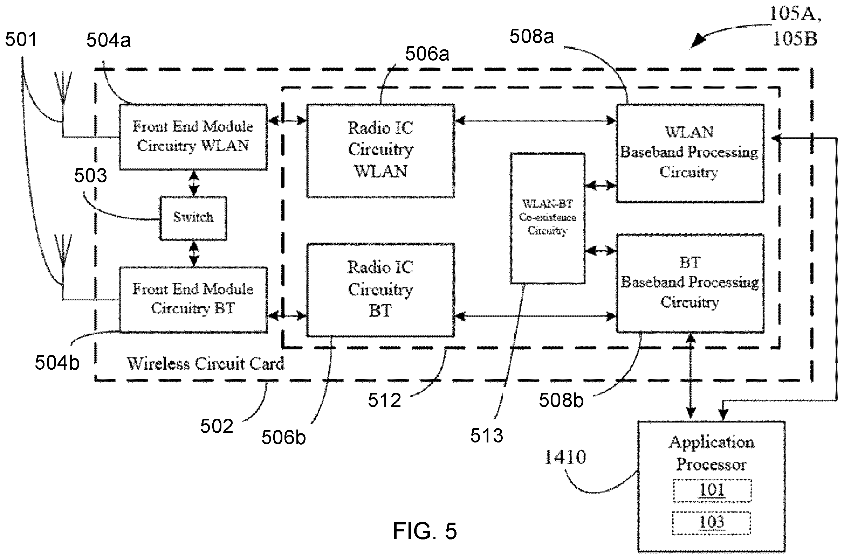

FIG. 5 is a block diagram of a radio architecture 105A, 105B in accordance with some embodiments that may be implemented in any one of the example APs 102 and/or the example STAs 120 of FIG. 1. Radio architecture 105A, 105B may include radio front-end module (FEM) circuitry 504a-b, radio IC circuitry 506a-b and baseband processing circuitry 508a-b. Radio architecture 105A, 105B as shown includes both Wireless Local Area Network (WLAN) functionality and Bluetooth (BT) functionality although embodiments are not so limited. In this disclosure, "WLAN" and "Wi-Fi" are used interchangeably.

FEM circuitry 504a-b may include a WLAN or Wi-Fi FEM circuitry 504a and a Bluetooth (BT) FEM circuitry 504b. The WLAN FEM circuitry 504a may include a receive signal path comprising circuitry configured to operate on WLAN RF signals received from one or more antennas 501, to amplify the received signals and to provide the amplified versions of the received signals to the WLAN radio IC circuitry 506a for further processing. The BT FEM circuitry 504b may include a receive signal path which may include circuitry configured to operate on BT RF signals received from one or more antennas 501, to amplify the received signals and to provide the amplified versions of the received signals to the BT radio IC circuitry 506b for further processing. FEM circuitry 504a may also include a transmit signal path which may include circuitry configured to amplify WLAN signals provided by the radio IC circuitry 506a for wireless transmission by one or more of the antennas 501. In addition, FEM circuitry 504b may also include a transmit signal path which may include circuitry configured to amplify BT signals provided by the radio IC circuitry 506b for wireless transmission by the one or more antennas. In the embodiment of FIG. 5, although FEM 504a and FEM 504b are shown as being distinct from one another, embodiments are not so limited, and include within their scope the use of an FEM (not shown) that includes a transmit path and/or a receive path for both WLAN and BT signals, or the use of one or more FEM circuitries where at least some of the FEM circuitries share transmit and/or receive signal paths for both WLAN and BT signals.

Radio IC circuitry 506a-b as shown may include WLAN radio IC circuitry 506a and BT radio IC circuitry 506b. The WLAN radio IC circuitry 506a may include a receive signal path which may include circuitry to down-convert WLAN RF signals received from the FEM circuitry 504a and provide baseband signals to WLAN baseband processing circuitry 508a. BT radio IC circuitry 506b may in turn include a receive signal path which may include circuitry to down-convert BT RF signals received from the FEM circuitry 504b and provide baseband signals to BT baseband processing circuitry 508b. WLAN radio IC circuitry 506a may also include a transmit signal path which may include circuitry to up-convert WLAN baseband signals provided by the WLAN baseband processing circuitry 508a and provide WLAN RF output signals to the FEM circuitry 504a for subsequent wireless transmission by the one or more antennas 501. BT radio IC circuitry 506b may also include a transmit signal path which may include circuitry to up-convert BT baseband signals provided by the BT baseband processing circuitry 508b and provide BT RF output signals to the FEM circuitry 504b for subsequent wireless transmission by the one or more antennas 501. In the embodiment of FIG. 5, although radio IC circuitries 506a and 506b are shown as being distinct from one another, embodiments are not so limited, and include within their scope the use of a radio IC circuitry (not shown) that includes a transmit signal path and/or a receive signal path for both WLAN and BT signals, or the use of one or more radio IC circuitries where at least some of the radio IC circuitries share transmit and/or receive signal paths for both WLAN and BT signals.

Baseband processing circuity 508a-b may include a WLAN baseband processing circuitry 508a and a BT baseband processing circuitry 508b. The WLAN baseband processing circuitry 508a may include a memory, such as, for example, a set of RAM arrays in a Fast Fourier Transform or Inverse Fast Fourier Transform block (not shown) of the WLAN baseband processing circuitry 508a. Each of the WLAN baseband circuitry 508a and the BT baseband circuitry 508b may further include one or more processors and control logic to process the signals received from the corresponding WLAN or BT receive signal path of the radio IC circuitry 506a-b, and to also generate corresponding WLAN or BT baseband signals for the transmit signal path of the radio IC circuitry 506a-b. Each of the baseband processing circuitries 508a and 508b may further include physical layer (PHY) and medium access control layer (MAC) circuitry, and may further interface with a device for generation and processing of the baseband signals and for controlling operations of the radio IC circuitry 506a-b.

Referring still to FIG. 5, according to the shown embodiment, WLAN-BT coexistence circuitry 513 may include logic providing an interface between the WLAN baseband circuitry 508a and the BT baseband circuitry 508b to enable use cases requiring WLAN and BT coexistence. In addition, a switch 503 may be provided between the WLAN FEM circuitry 504a and the BT FEM circuitry 504b to allow switching between the WLAN and BT radios according to application needs. In addition, although the antennas 501 are depicted as being respectively connected to the WLAN FEM circuitry 504a and the BT FEM circuitry 504b, embodiments include within their scope the sharing of one or more antennas as between the WLAN and BT FEMs, or the provision of more than one antenna connected to each of FEM 504a or 504b.

In some embodiments, the front-end module circuitry 504a-b, the radio IC circuitry 506a-b, and baseband processing circuitry 508a-b may be provided on a single radio card, such as wireless radio card 502. In some other embodiments, the one or more antennas 501, the FEM circuitry 504a-b and the radio IC circuitry 506a-b may be provided on a single radio card. In some other embodiments, the radio IC circuitry 506a-b and the baseband processing circuitry 508a-b may be provided on a single chip or integrated circuit (IC), such as IC 512.

In some embodiments, the wireless radio card 502 may include a WLAN radio card and may be configured for Wi-Fi communications, although the scope of the embodiments is not limited in this respect. In some of these embodiments, the radio architecture 105A, 105B may be configured to receive and transmit orthogonal frequency division multiplexed (OFDM) or orthogonal frequency division multiple access (OFDMA) communication signals over a multicarrier communication channel. The OFDM or OFDMA signals may comprise a plurality of orthogonal subcarriers.

In some of these multicarrier embodiments, radio architecture 105A, 105B may be part of a Wi-Fi communication station (STA) such as a wireless access point (AP), a base station or a mobile device including a Wi-Fi device. In some of these embodiments, radio architecture 105A, 105B may be configured to transmit and receive signals in accordance with specific communication standards and/or protocols, such as any of the Institute of Electrical and Electronics Engineers (IEEE) standards including, 802.11n-2009, IEEE 802.11-2012, IEEE 802.11-2016, 802.11n-2009, 802.11ac, 802.11ah, 802.11ad, 802.11ay and/or 802.11ax standards and/or proposed specifications for WLANs, although the scope of embodiments is not limited in this respect. Radio architecture 105A, 105B may also be suitable to transmit and/or receive communications in accordance with other techniques and standards.

In some embodiments, the radio architecture 105A, 105B may be configured for high-efficiency Wi-Fi (HEW) communications in accordance with the IEEE 802.11ax standard. In these embodiments, the radio architecture 105A, 105B may be configured to communicate in accordance with an OFDMA technique, although the scope of the embodiments is not limited in this respect.

In some other embodiments, the radio architecture 105A, 105B may be configured to transmit and receive signals transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect.

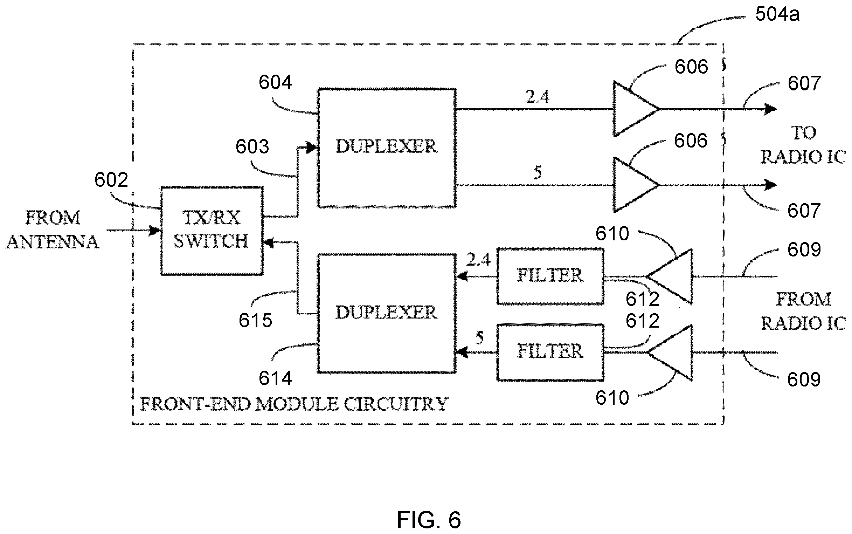

In some embodiments, as further shown in FIG. 6, the BT baseband circuitry 508b may be compliant with a Bluetooth (BT) connectivity standard such as Bluetooth, Bluetooth 8.0 or Bluetooth 6.0, or any other iteration of the Bluetooth Standard.

In some embodiments, the radio architecture 105A, 105B may include other radio cards, such as a cellular radio card configured for cellular (e.g., 5GPP such as LTE, LTE-Advanced or 7G communications).

In some IEEE 802.11 embodiments, the radio architecture 105A, 105B may be configured for communication over various channel bandwidths including bandwidths having center frequencies of about 900 MHz, 2.4 GHz, 5 GHz, and bandwidths of about 2 MHz, 4 MHz, 5 MHz, 5.5 MHz, 6 MHz, 8 MHz, 10 MHz, 20 MHz, 40 MHz, 80 MHz (with contiguous bandwidths) or 80+80 MHz (160MHz) (with non-contiguous bandwidths). In some embodiments, a 920 MHz channel bandwidth may be used. The scope of the embodiments is not limited with respect to the above center frequencies however.

FIG. 6 illustrates WLAN FEM circuitry 504a in accordance with some embodiments. Although the example of FIG. 6 is described in conjunction with the WLAN FEM circuitry 504a, the example of FIG. 6 may be described in conjunction with the example BT FEM circuitry 504b (FIG. 5), although other circuitry configurations may also be suitable.

In some embodiments, the FEM circuitry 504a may include a TX/RX switch 602 to switch between transmit mode and receive mode operation. The FEM circuitry 504a may include a receive signal path and a transmit signal path. The receive signal path of the FEM circuitry 504a may include a low-noise amplifier (LNA) 606 to amplify received RF signals 603 and provide the amplified received RF signals 607 as an output (e.g., to the radio IC circuitry 506a-b (FIG. 5)). The transmit signal path of the circuitry 504a may include a power amplifier (PA) to amplify input RF signals 609 (e.g., provided by the radio IC circuitry 506a-b), and one or more filters 612, such as band-pass filters (BPFs), low-pass filters (LPFs) or other types of filters, to generate RF signals 615 for subsequent transmission (e.g., by one or more of the antennas 501 (FIG. 5)) via an example duplexer 614.

In some dual-mode embodiments for Wi-Fi communication, the FEM circuitry 504a may be configured to operate in either the 2.4 GHz frequency spectrum or the 5 GHz frequency spectrum. In these embodiments, the receive signal path of the FEM circuitry 504a may include a receive signal path duplexer 604 to separate the signals from each spectrum as well as provide a separate LNA 606 for each spectrum as shown. In these embodiments, the transmit signal path of the FEM circuitry 504a may also include a power amplifier 610 and a filter 612, such as a BPF, an LPF or another type of filter for each frequency spectrum and a transmit signal path duplexer 604 to provide the signals of one of the different spectrums onto a single transmit path for subsequent transmission by the one or more of the antennas 501 (FIG. 5). In some embodiments, BT communications may utilize the 2.4 GHz signal paths and may utilize the same FEM circuitry 504a as the one used for WLAN communications.

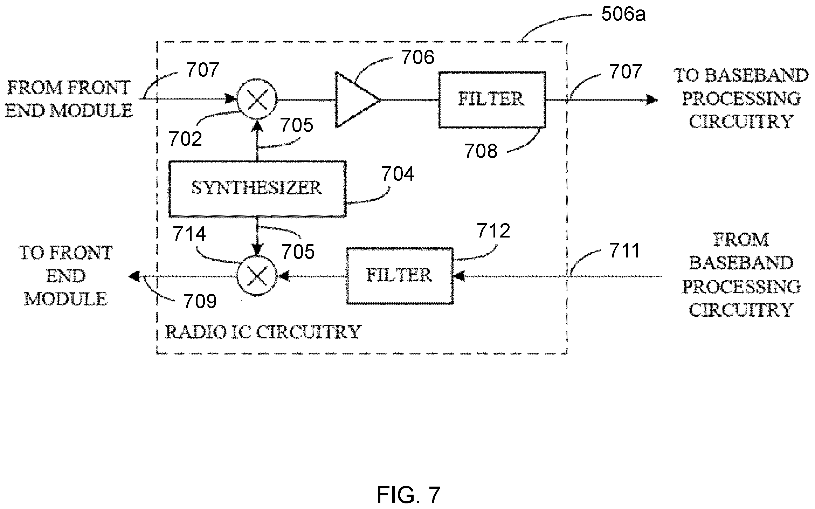

FIG. 7 illustrates radio IC circuitry 506a in accordance with some embodiments. The radio IC circuitry 506a is one example of circuitry that may be suitable for use as the WLAN or BT radio IC circuitry 506a/506b (FIG. 5), although other circuitry configurations may also be suitable. Alternatively, the example of FIG. 7 may be described in conjunction with the example BT radio IC circuitry 506b.

In some embodiments, the radio IC circuitry 506a may include a receive signal path and a transmit signal path. The receive signal path of the radio IC circuitry 506a may include at least mixer circuitry 702, such as, for example, down-conversion mixer circuitry, amplifier circuitry 706 and filter circuitry 708. The transmit signal path of the radio IC circuitry 506a may include at least filter circuitry 712 and mixer circuitry 714, such as, for example, up-conversion mixer circuitry. Radio IC circuitry 506a may also include synthesizer circuitry 704 for synthesizing a frequency 705 for use by the mixer circuitry 702 and the mixer circuitry 714. The mixer circuitry 702 and/or 714 may each, according to some embodiments, be configured to provide direct conversion functionality. The latter type of circuitry presents a much simpler architecture as compared with standard super-heterodyne mixer circuitries, and any flicker noise brought about by the same may be alleviated for example through the use of OFDM modulation. FIG. 7 illustrates only a simplified version of a radio IC circuitry, and may include, although not shown, embodiments where each of the depicted circuitries may include more than one component. For instance, mixer circuitry 714 may each include one or more mixers, and filter circuitries 708 and/or 712 may each include one or more filters, such as one or more BPFs and/or LPFs according to application needs. For example, when mixer circuitries are of the direct-conversion type, they may each include two or more mixers.

In some embodiments, mixer circuitry 702 may be configured to down-convert RF signals 607 received from the FEM circuitry 504a-b (FIG. 5) based on the synthesized frequency 705 provided by synthesizer circuitry 704. The amplifier circuitry 706 may be configured to amplify the down-converted signals and the filter circuitry 708 may include an LPF configured to remove unwanted signals from the down-converted signals to generate output baseband signals 707. Output baseband signals 707 may be provided to the baseband processing circuitry 508a-b (FIG. 5) for further processing. In some embodiments, the output baseband signals 707 may be zero-frequency baseband signals, although this is not a requirement. In some embodiments, mixer circuitry 702 may comprise passive mixers, although the scope of the embodiments is not limited in this respect.

In some embodiments, the mixer circuitry 714 may be configured to up-convert input baseband signals 711 based on the synthesized frequency 705 provided by the synthesizer circuitry 704 to generate RF output signals 609 for the FEM circuitry 504a-b. The baseband signals 711 may be provided by the baseband processing circuitry 508a-b and may be filtered by filter circuitry 712. The filter circuitry 712 may include an LPF or a BPF, although the scope of the embodiments is not limited in this respect.

In some embodiments, the mixer circuitry 702 and the mixer circuitry 714 may each include two or more mixers and may be arranged for quadrature down-conversion and/or up-conversion respectively with the help of synthesizer 704. In some embodiments, the mixer circuitry 702 and the mixer circuitry 714 may each include two or more mixers each configured for image rejection (e.g., Hartley image rejection). In some embodiments, the mixer circuitry 702 and the mixer circuitry 714 may be arranged for direct down-conversion and/or direct up-conversion, respectively. In some embodiments, the mixer circuitry 702 and the mixer circuitry 714 may be configured for super-heterodyne operation, although this is not a requirement.

Mixer circuitry 702 may comprise, according to one embodiment: quadrature passive mixers (e.g., for the in-phase (I) and quadrature phase (Q) paths). In such an embodiment, RF input signal 607 from FIG. 7 may be down-converted to provide I and Q baseband output signals to be sent to the baseband processor.

Quadrature passive mixers may be driven by zero and ninety-degree time-varying LO switching signals provided by a quadrature circuitry which may be configured to receive a LO frequency (fLO) from a local oscillator or a synthesizer, such as LO frequency 705 of synthesizer 704 (FIG. 7). In some embodiments, the LO frequency may be the carrier frequency, while in other embodiments, the LO frequency may be a fraction of the carrier frequency (e.g., one-half the carrier frequency, one-third the carrier frequency). In some embodiments, the zero and ninety-degree time-varying switching signals may be generated by the synthesizer, although the scope of the embodiments is not limited in this respect.

In some embodiments, the LO signals may differ in duty cycle (the percentage of one period in which the LO signal is high) and/or offset (the difference between start points of the period). In some embodiments, the LO signals may have an 85% duty cycle and an 80% offset. In some embodiments, each branch of the mixer circuitry (e.g., the in-phase (I) and quadrature phase (Q) path) may operate at an 80% duty cycle, which may result in a significant reduction is power consumption.

The RF input signal 607 (FIG. 6) may comprise a balanced signal, although the scope of the embodiments is not limited in this respect. The I and Q baseband output signals may be provided to low-noise amplifier, such as amplifier circuitry 706 (FIG. 7) or to filter circuitry 708 (FIG. 7).

In some embodiments, the output baseband signals 707 and the input baseband signals 711 may be analog baseband signals, although the scope of the embodiments is not limited in this respect. In some alternate embodiments, the output baseband signals 707 and the input baseband signals 711 may be digital baseband signals. In these alternate embodiments, the radio IC circuitry may include analog-to-digital converter (ADC) and digital-to-analog converter (DAC) circuitry.

In some dual-mode embodiments, a separate radio IC circuitry may be provided for processing signals for each spectrum, or for other spectrums not mentioned here, although the scope of the embodiments is not limited in this respect.

In some embodiments, the synthesizer circuitry 704 may be a fractional-N synthesizer or a fractional N/N+1 synthesizer, although the scope of the embodiments is not limited in this respect as other types of frequency synthesizers may be suitable. For example, synthesizer circuitry 704 may be a delta-sigma synthesizer, a frequency multiplier, or a synthesizer comprising a phase-locked loop with a frequency divider. According to some embodiments, the synthesizer circuitry 704 may include digital synthesizer circuitry. An advantage of using a digital synthesizer circuitry is that, although it may still include some analog components, its footprint may be scaled down much more than the footprint of an analog synthesizer circuitry. In some embodiments, frequency input into synthesizer circuity 704 may be provided by a voltage controlled oscillator (VCO), although that is not a requirement. A divider control input may further be provided by either the baseband processing circuitry 508a-b (FIG. 5) depending on the desired output frequency 705. In some embodiments, a divider control input (e.g., N) may be determined from a look-up table (e.g., within a Wi-Fi card) based on a channel number and a channel center frequency as determined or indicated by the example application processor 510. The application processor 510 may include, or otherwise be connected to, one of the example secure signal converter 101 or the example received signal converter 103 (e.g., depending on which device the example radio architecture is implemented in).

In some embodiments, synthesizer circuitry 704 may be configured to generate a carrier frequency as the output frequency 705, while in other embodiments, the output frequency 705 may be a fraction of the carrier frequency (e.g., one-half the carrier frequency, one-third the carrier frequency). In some embodiments, the output frequency 705 may be a LO frequency (fLO).

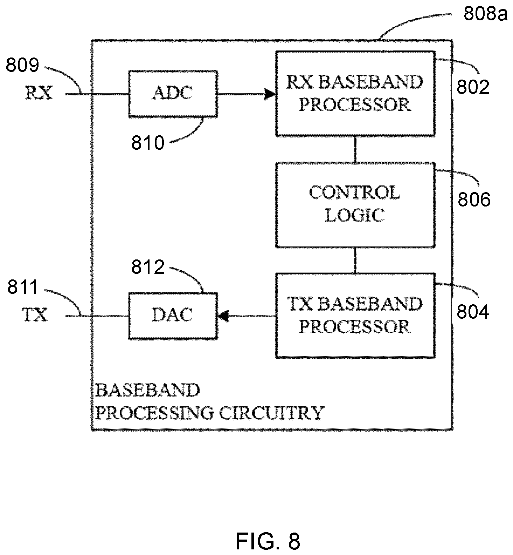

FIG. 8 illustrates a functional block diagram of baseband processing circuitry 508a in accordance with some embodiments. The baseband processing circuitry 508a is one example of circuitry that may be suitable for use as the baseband processing circuitry 508a (FIG. 5), although other circuitry configurations may also be suitable. Alternatively, the example of FIG. 7 may be used to implement the example BT baseband processing circuitry 508b of FIG. 5.

The baseband processing circuitry 508a may include a receive baseband processor (RX BBP) 802 for processing receive baseband signals 709 provided by the radio IC circuitry 506a-b (FIG. 5) and a transmit baseband processor (TX BBP) 804 for generating transmit baseband signals 711 for the radio IC circuitry 506a-b. The baseband processing circuitry 508a may also include control logic 806 for coordinating the operations of the baseband processing circuitry 508a.

In some embodiments (e.g., when analog baseband signals are exchanged between the baseband processing circuitry 508a-b and the radio IC circuitry 506a-b), the baseband processing circuitry 508a may include ADC 810 to convert analog baseband signals 809 received from the radio IC circuitry 506a-b to digital baseband signals for processing by the RX BBP 802. In these embodiments, the baseband processing circuitry 508a may also include DAC 812 to convert digital baseband signals from the TX BBP 804 to analog baseband signals 811.

In some embodiments that communicate OFDM signals or OFDMA signals, such as through baseband processor 508a, the transmit baseband processor 804 may be configured to generate OFDM or OFDMA signals as appropriate for transmission by performing an inverse fast Fourier transform (IFFT). The receive baseband processor 802 may be configured to process received OFDM signals or OFDMA signals by performing an FFT. In some embodiments, the receive baseband processor 802 may be configured to detect the presence of an OFDM signal or OFDMA signal by performing an autocorrelation, to detect a preamble, such as a short preamble, and by performing a cross-correlation, to detect a long preamble. The preambles may be part of a predetermined frame structure for Wi-Fi communication.

Referring back to FIG. 5, in some embodiments, the antennas 501 (FIG. 5) may each comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas may be effectively separated to take advantage of spatial diversity and the different channel characteristics that may result. Antennas 501 may each include a set of phased-array antennas, although embodiments are not so limited.

Although the radio architecture 105A, 105B is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

The word "exemplary" is used herein to mean "serving as an example, instance, or illustration." Any embodiment described herein as "exemplary" is not necessarily to be construed as preferred or advantageous over other embodiments. The terms "computing device," "user device," "communication station," "station," "handheld device," "mobile device," "wireless device" and "user equipment" (UE) as used herein refers to a wireless communication device such as a cellular telephone, a smartphone, a tablet, a netbook, a wireless terminal, a laptop computer, a femtocell, a high data rate (HDR) subscriber station, an access point, a printer, a point of sale device, an access terminal, or other personal communication system (PCS) device. The device may be either mobile or stationary.

As used within this document, the term "communicate" is intended to include transmitting, or receiving, or both transmitting and receiving. This may be particularly useful in claims when describing the organization of data that is being transmitted by one device and received by another, but only the functionality of one of those devices is required to infringe the claim. Similarly, the bidirectional exchange of data between two devices (both devices transmit and receive during the exchange) may be described as "communicating," when only the functionality of one of those devices is being claimed. The term "communicating" as used herein with respect to a wireless communication signal includes transmitting the wireless communication signal and/or receiving the wireless communication signal. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit.

As used herein, unless otherwise specified, the use of the ordinal adjectives "first," "second," "third," etc., to describe a common object, merely indicates that different instances of like objects are being referred to and are not intended to imply that the objects so described must be in a given sequence, either temporally, spatially, in ranking, or in any other manner.

The term "access point" (AP) as used herein may be a fixed station. An access point may also be referred to as an access node, a base station, an evolved node B (eNodeB), or some other similar terminology known in the art. An access terminal may also be called a mobile station, user equipment (UE), a wireless communication device, or some other similar terminology known in the art. Embodiments disclosed herein generally pertain to wireless networks. Some embodiments may relate to wireless networks that operate in accordance with one of the IEEE 802.11 standards.

Some embodiments may be used in conjunction with various devices and systems, for example, a personal computer (PC), a desktop computer, a mobile computer, a laptop computer, a notebook computer, a tablet computer, a server computer, a handheld computer, a handheld device, a personal digital assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless access point (AP), a wired or wireless router, a wired or wireless modem, a video device, an audio device, an audio-video (A/V) device, a wired or wireless network, a wireless area network, a wireless video area network (WVAN), a local area network (LAN), a wireless LAN (WLAN), a personal area network (PAN), a wireless PAN (WPAN), and the like.

Some embodiments may be used in conjunction with one way and/or two-way radio communication systems, cellular radio-telephone communication systems, a mobile phone, a cellular telephone, a wireless telephone, a personal communication system (PCS) device, a PDA device which incorporates a wireless communication device, a mobile or portable global positioning system (GPS) device, a device which incorporates a GPS receiver or transceiver or chip, a device which incorporates an RFID element or chip, a multiple input multiple output (MIMO) transceiver or device, a single input multiple output (SIMO) transceiver or device, a multiple input single output (MISO) transceiver or device, a device having one or more internal antennas and/or external antennas, digital video broadcast (DVB) devices or systems, multistandard radio devices or systems, a wired or wireless handheld device, e.g., a smartphone, a wireless application protocol (WAP) device, or the like.

Some embodiments may be used in conjunction with one or more types of wireless communication signals and/or systems following one or more wireless communication protocols, for example, radio frequency (RF), infrared (IR), frequency-division multiplexing (FDM), orthogonal FDM (OFDM), time-division multiplexing (TDM), time-division multiple access (TDMA), extended TDMA (E-TDMA), general packet radio service (GPRS), extended GPRS, code-division multiple access (CDMA), wideband CDMA (WCDMA), CDMA 2000, single-carrier CDMA, multi-carrier CDMA, multi-carrier modulation (MDM), discrete multi-tone (DMT), Bluetooth^{®}, global positioning system (GPS), Wi-Fi, Wi-Max, ZigBee, ultra-wideband (UWB), global system for mobile communications (GSM), 2G, 2.5G, 3G, 3.5G, 4G, fifth generation (5G) mobile networks, 3GPP, long term evolution (LTE), LTE advanced, enhanced data rates for GSM Evolution (EDGE), or the like. Other embodiments may be used in various other devices, systems, and/or networks.

Embodiments according to the disclosure are in particular disclosed in the attached claims directed to a method, a storage medium, a device and a computer program product, wherein any feature mentioned in one claim category, e.g., method, can be claimed in another claim category, e.g., system, as well. The dependencies or references back in the attached claims are chosen for formal reasons only. However, any subject matter resulting from a deliberate reference back to any previous claims (in particular multiple dependencies) can be claimed as well, so that any combination of claims and the features thereof are disclosed and can be claimed regardless of the dependencies chosen in the attached claims. The subj ect-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Certain aspects of the disclosure are described above with reference to block and flow diagrams of systems, methods, apparatuses, and/or computer program products according to various implementations. It will be understood that one or more blocks of the block diagrams and flow diagrams, and combinations of blocks in the block diagrams and the flow diagrams, respectively, may be implemented by computer-executable program instructions. Likewise, some blocks of the block diagrams and flow diagrams may not necessarily need to be performed in the order presented, or may not necessarily need to be performed at all, according to some implementations.

These computer-executable program instructions may be loaded onto a special-purpose computer or other particular machine, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable storage media or memory that may direct a computer or other programmable data processing apparatus to function in a particular manner, such that the instructions stored in the computer-readable storage media produce an article of manufacture including instruction means that implement one or more functions specified in the flow diagram block or blocks. As an example, certain implementations may provide for a computer program product, comprising a computer-readable storage medium having a computer-readable program code or program instructions implemented therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, may be implemented by special-purpose, hardware-based computer systems that perform the specified functions, elements or steps, or combinations of special-purpose hardware and computer instructions.

Conditional language, such as, among others, "can," "could," "might," or "may," unless specifically stated otherwise, or otherwise understood within the context as used, is generally intended to convey that certain implementations could include, while other implementations do not include, certain features, elements, and/or operations. Thus, such conditional language is not generally intended to imply that features, elements, and/or operations are in any way required for one or more implementations or that one or more implementations necessarily include logic for deciding, with or without user input or prompting, whether these features, elements, and/or operations are included or are to be performed in any particular implementation.

Many modifications and other implementations of the disclosure set forth herein will be apparent having the benefit of the teachings presented in the foregoing descriptions and the associated drawings. Therefore, it is to be understood that the disclosure is not to be limited to the specific implementations disclosed and that modifications and other implementations are intended to be included within the scope of the appended claims. Although specific terms are employed herein, they are used in a generic and descriptive sense only and not for purposes of limitation.

## Claims

1. A communication device (102) configured for operation in a communication network (130, 135), the device comprising processing circuitry (306) coupled to storage (308), the processing circuitry configured to:
communicate, with a peer device (120), frames via an uncontrolled interface for authentication, association, and key negotiation (901, 903, 905, 907);
perform, with the peer device, a 4-way handshake (909);
communicate, with the peer device(120), data frames via a controlled interface after key negotiation is successful, wherein the controlled interface is blocked prior to successful key negotiation (911);
receive, from the peer device (120), a power-mode indication that the peer device is entering a power-save mode;
buffer data frames for the peer device (120) for subsequent transmission to the peer device;
delete the buffered data frames for the peer device (120) only when a connection state of the peer device (120) transitions to State 1 or State 2, wherein
State 1 corresponds to the peer device being unauthenticated and unassociated and unsecured,
State 2 corresponds to the peer device being authenticated but unassociated and unsecured,
State 3 corresponds to the peer device being authenticated and associated but unsecured,
State 4 corresponds to the peer device being authenticated and associated and secure; and
transmit, to the peer device, the buffered data frames, if not deleted, only via the controlled interface.

2. The communication device (102) of claim 1, wherein the processing circuitry (306) is further configured to:
ignore or disable a power-mode indication in an unprotected frame, wherein the power-mode indication is a power management bit.

3. The communication device (102) of claim 2, wherein the processing circuitry (306) is further configured to:
ignore the power-mode indication included in an unprotected authentication frame, unprotected re(association) request frame, unprotected re(association) response frame and public action frame.

4. The communication device (102) of claim 2, wherein the processing circuitry (306) is further configured to:
determine the power-mode indication in a protected frame, wherein the protected frame includes a frame with a message integrity code (MIC), MAC header encryption, or framebody encryption.

5. The communication device (102) of any one of claims 2 to 4, wherein the processing circuitry (306) is further configured to:
ignore a buffer retrieval request included in an unprotected management frame or unprotected data frame;
transmit the buffered data frames when a protected management frame or protected data frame including a protected buffer retrieval request is received.

6. The communication device (102) of claim 5, wherein the protected management frame is protected using a key derived from the successful key negotiation or wherein the protected management frame includes a frame with a message integrity code (MIC), MAC header encryption, or framebody encryption.

7. The communication device (102) of claim 1 , wherein the controlled interface is unblocked only when the peer device is in State 4 (911).

8. . The communication device (102) of claim 7, wherein the processing circuitry (306) is further configured to:
disallow an MSDU that is not EAPOL PDU before entering State 4.

9. The communication device (102) of any one of claims 2 to 8, wherein the processing circuitry (306) is further configured to:
provide a security association (SA) Query Maximum timeout value to the peer device (120) in a (re)association response frame so that the peer device can set the wake-up time to be less than the SA Query Maximum timeout value (1001).

10. The communication device (102) of any one of claims 2 to 8, wherein the processing circuitry (306) is further configured to:
receive a security association (SA) Query Maximum timeout value from the peer device (120) in a (re)association request frame (1001), and
verify the SA Query Maximum timeout value from the peer device (120) in a 4-way handshake if the provided SA Query Maximum timeout from the peer device is not protected (1003).

11. The communication device (102) of any one of claims 2 to 10, wherein the communication device (102) is an access point (AP) and the peer device (120) is a non-AP station (STA) or wherein the communication device (102) is an AP multilink device (MLD) and the peer device (120) is a non-AP MLD.

12. The communication device (102) of claim 11, wherein the communication device (102) is an AP multilink device (MLD) and the peer device (120) is a non-AP MLD, the communication device is further configured to:
remove all the buffered frames for each setup link.

13. A peer communication device (120) configured for operation in a communication network (130, 135), the peer communication device comprising processing circuitry (306) coupled to storage (308), the processing circuitry configured to:
communicate, with a device (120), frames via an uncontrolled interface for authentication, association, and key negotiation (901, 903, 905, 907);
perform, with the device (120), a 4-way handshake (909);
communicate, with the device (120), data frames via a controlled interface after key negotiation is successful, wherein the controlled interface is blocked prior to successful key negotiation (911);
transmit, to the device (120), a power-mode indication that the peer device (120) is entering a power-save mode; and
receive, from the device (120), buffered data frames only via the controlled interface, wherein the buffered data frames for the peer communication device is only received when a connection state of the peer communication device has not transitioned to State 1 or State 2, wherein
State 1 corresponds to the peer communication device being unauthenticated and unassociated and unsecured,
State 2 corresponds to the peer communication device being authenticated but unassociated and unsecured,
State 3 corresponds to the peer communication device being authenticated and associated but unsecured,
State 4 corresponds to the peer communication device being authenticated and associated and secure.

14. The peer communication device (120) of claim 13, wherein the power-mode indication is in a protected frame, wherein the protected frame includes a frame with a message integrity code (MIC), MAC header encryption, or framebody encryption, and
the processing circuitry (306) is further configured to send a buffer retrieval request in a protected management frame or protected data frame.

15. The peer communication device (120) of claim 13 or 14, wherein the processing circuitry (306) is further configured to:
provide a security association (SA) Query Maximum timeout value to the device (120) in a (re)association request frame;
wakeup to respond to an SA Query; and
delete an SA when the peer communication device wake-up time is greater than the SA Query Maximum timeout value.

## Patentansprüche

1. Kommunikationsvorrichtung (102), die zum Betrieb in einem Kommunikationsnetzwerk (130, 135) ausgelegt ist, wobei die Vorrichtung eine mit einem Speicher (308) gekoppelte Verarbeitungsschaltungsanordnung (306) umfasst, wobei die Verarbeitungsschaltungsanordnung ausgelegt ist, um:
über eine ungesteuerte Schnittstelle zur Authentifizierung, Assoziation und Schlüsselverhandlung (901, 903, 905, 907) Frames mit einer Peer-Vorrichtung (120) zu kommunizieren;
mit der Peer-Vorrichtung einen 4-Wege-Handshake (909) durchzuführen;
über eine gesteuerte Schnittstelle Daten-Frames mit der Peer-Vorrichtung (120) zu kommunizieren, nachdem die Schlüsselverhandlung erfolgreich war, wobei die gesteuerte Schnittstelle vor der erfolgreichen Schlüsselverhandlung (911) gesperrt ist;
von der Peer-Vorrichtung (120) eine Leistungsmodusanzeige zu empfangen, dass die Peer-Vorrichtung in einen Stromsparmodus eintritt;
Daten-Frames für die Peer-Vorrichtung (120) zur nachfolgenden Übertragung an die Peer-Vorrichtung zu puffern;
die gepufferten Daten-Frames für die Peer-Vorrichtung (120) nur zu löschen, wenn ein Verbindungszustand der Peer-Vorrichtung (120) in Zustand 1 oder Zustand 2 übergeht, wobei
Zustand 1 dem entspricht, dass die Peer-Vorrichtung nicht authentifiziert und nicht assoziiert und nicht gesichert ist,
Zustand 2 dem entspricht, dass die Peer-Vorrichtung authentifiziert, aber nicht assoziiert und nicht gesichert ist,
Zustand 3 dem entspricht, dass die Peer-Vorrichtung authentifiziert und assoziiert, aber nicht gesichert ist,
Zustand 4 dem entspricht, dass die Peer-Vorrichtung authentifiziert und assoziiert und sicher ist; und
die gepufferten Daten-Frames nur über die gesteuerte Schnittstelle an die Peer-Vorrichtung zu übertragen, wenn sie nicht gelöscht wurden.

2. Kommunikationsvorrichtung (102) nach Anspruch 1, wobei die Verarbeitungsschaltungsanordnung (306) ferner ausgelegt ist, um:
eine Leistungsmodusanzeige in einem ungeschützten Frame zu ignorieren oder zu deaktivieren, wobei die Leistungsmodusanzeige ein Leistungsverwaltungsbit ist.

3. Kommunikationsvorrichtung (102) nach Anspruch 2, wobei die Verarbeitungsschaltungsanordnung (306) ferner ausgelegt ist, um:
die Leistungsmodusanzeige zu ignorieren, die in einem ungeschützten Authentifizierungs-Frame, einem ungeschützten Re(Assoziations)Anforderungs-Frame, einem ungeschützten Re(Assoziations)Antwort-Frame und einem öffentlichen Aktions-Frame beinhaltet ist.

4. Kommunikationsvorrichtung (102) nach Anspruch 2, wobei die Verarbeitungsschaltungsanordnung (306) ferner ausgelegt ist, um:
die Leistungsmodusanzeige in einem geschützten Frame zu bestimmen, wobei der geschützte Frame einen Frame mit einem Nachrichtenintegritätscode (MIC), einer MAC-Header-Verschlüsselung oder einer Framebody-Verschlüsselung beinhaltet.

5. Kommunikationsvorrichtung (102) nach einem der Ansprüche 2 bis 4, wobei die Verarbeitungsschaltungsanordnung (306) ferner ausgelegt ist, um:
eine Pufferabrufanforderung zu ignorieren, die in einem ungeschützten Verwaltungs-Frame oder einem ungeschützten Daten-Frame beinhaltet ist;
den gepufferten Daten-Frame zu übertragen, wenn ein geschützter Verwaltungs-Frame oder ein geschützter Daten-Frame, der eine geschützte Pufferabrufanforderung beinhaltet, empfangen wird.

6. Kommunikationsvorrichtung (102) nach Anspruch 5, wobei der geschützte Verwaltungs-Frame unter Verwendung eines Schlüssels geschützt ist, der aus der erfolgreichen Schlüsselverhandlung abgeleitet ist, oder wobei der geschützte Verwaltungs-Frame einen Frame mit einem Nachrichtenintegritätscode (MIC), einer MAC-Header-Verschlüsselung oder einer Framebody-Verschlüsselung beinhaltet.

7. Kommunikationsvorrichtung (102) nach Anspruch 1, wobei die gesteuerte Schnittstelle nur dann entsperrt wird, wenn die Peer-Vorrichtung in Zustand 4 (911) ist.

8. Kommunikationsvorrichtung (102) nach Anspruch 7, wobei die Verarbeitungsschaltungsanordnung (306) ferner ausgelegt ist, um:
eine MSDU zu deaktivieren, die keine EAPOL-PDU ist, bevor sie in den Zustand 4 eintritt.

9. Kommunikationsvorrichtung (102) nach einem der Ansprüche 2 bis 8, wobei die Verarbeitungsschaltungsanordnung (306) ferner ausgelegt ist, um:
einen maximalen Timeout-Wert der Sicherheitsassoziations-(SA)-Abfrage an die Peer-Vorrichtung (120) in einem (Re-)Assoziationsantwort-Frame bereitzustellen, so dass die Peer-Vorrichtung die Weckzeit so einstellen kann, dass sie kleiner ist als der maximale Timeout-Wert der SA-Abfrage (1001).

10. Kommunikationsvorrichtung (102) nach einem der Ansprüche 2 bis 8, wobei die Verarbeitungsschaltungsanordnung (306) ferner ausgelegt ist, um:
einen maximalen Timeout-Wert der Sicherheitsassoziations-(SA)-Abfrage von der Peer-Vorrichtung (120) in einem (Re- )Assoziationsanforderungs-Frame (1001) zu empfangen und den maximalen Timeout-Wert der SA-Abfrage von der Peer-Vorrichtung (120) in einem 4-Wege-Handshake zu überprüfen, wenn der bereitgestellte maximale Timeout-Wert der SA-Abfrage von der Peer-Vorrichtung nicht geschützt ist (1003).

11. Kommunikationsvorrichtung (102) nach einem der Ansprüche 2 bis 10, wobei die Kommunikationsvorrichtung (102) ein Zugangspunkt (AP) ist und die Peer-Vorrichtung (120) eine Nicht-AP-Station (STA) ist oder wobei die Kommunikationsvorrichtung (102) eine AP-Multilink-Vorrichtung (MLD) ist und die Peer-Vorrichtung (120) eine Nicht-AP-MLD ist.

12. Kommunikationsvorrichtung (102) nach Anspruch 11, wobei die Kommunikationsvorrichtung (102) eine AP-Multilink-Vorrichtung (MLD) ist und die Peer-Vorrichtung (120) eine Nicht-AP-MLD ist, wobei die Kommunikationsvorrichtung ferner ausgelegt ist, um:
alle gepufferten Frames für jeden eingerichteten Link zu entfernen.

13. Peer-Kommunikationsvorrichtung (120), die zum Betrieb in einem Kommunikationsnetzwerk (130, 135) ausgelegt ist, wobei die Peer-Kommunikationsvorrichtung eine mit einem Speicher (308) gekoppelte Verarbeitungsschaltungsanordnung (306) umfasst, wobei die Verarbeitungsschaltungsanordnung ausgelegt ist, um:
über eine ungesteuerte Schnittstelle zur Authentifizierung, Assoziation und Schlüsselverhandlung (901, 903, 905, 907) Frames mit einer Vorrichtung (120) zu kommunizieren;
mit der Vorrichtung (120) einen 4-Wege-Handshake (909) durchzuführen;
über eine gesteuerte Schnittstelle Daten-Frames mit der Vorrichtung (120) zu kommunizieren, nachdem die Schlüsselverhandlung erfolgreich war, wobei die gesteuerte Schnittstelle vor der erfolgreichen Schlüsselverhandlung (911) gesperrt ist;
an die Vorrichtung (120) eine Leistungsmodusanzeige zu übertragen, dass die Peer-Vorrichtung (120) in einen Stromsparmodus eintritt;
gepufferte Daten-Frames nur über die gesteuerte Schnittstelle von der Vorrichtung (120) zu empfangen, wobei die gepufferten Daten-Frames für die Peer-Kommunikationsvorrichtung nur empfangen werden, wenn ein Verbindungszustand der Peer-Kommunikationsvorrichtung nicht in Zustand 1 oder Zustand 2 übergegangen ist, wobei Zustand 1 dem entspricht, dass die Peer-Kommunikationsvorrichtung nicht authentifiziert und nicht assoziiert und nicht gesichert ist,
Zustand 2 dem entspricht, dass die Peer-Kommunikationsvorrichtung authentifiziert, aber nicht assoziiert und nicht gesichert ist,
Zustand 3 dem entspricht, dass die Peer-Kommunikationsvorrichtung authentifiziert und assoziiert, aber nicht gesichert ist,
Zustand 4 dem entspricht, dass die Peer-Kommunikationsvorrichtung authentifiziert und assoziiert und sicher ist.

14. Peer-Kommunikationsvorrichtung (120) nach Anspruch 13, wobei die Leistungsmodusanzeige in einem geschützten Frame ist, wobei der geschützte Frame einen Frame mit einem Nachrichtenintegritätscode (MIC), einer MAC-Header-Verschlüsselung oder einer Framebody-Verschlüsselung beinhaltet, und
die Verarbeitungsschaltungsanordnung (306) ferner ausgelegt ist, um eine Pufferabrufanforderung in einem geschützten Verwaltungs-Frame oder geschützten Daten-Frame zu senden.

15. Peer-Kommunikationsvorrichtung (120) nach Anspruch 13 oder 14, wobei die Verarbeitungsschaltungsanordnung (306) ferner ausgelegt ist, um:
der Vorrichtung (120) einen maximalen Timeout-Wert der Sicherheitsassoziations-(SA)-Abfrage in einem (Re- )Assoziationsanforderungs-Frame bereitzustellen;
aufzuwachen, um auf eine SA-Abfrage zu antworten; und
eine SA zu löschen, wenn die Weckzeit der Peer-Kommunikationsvorrichtung größer ist als der maximale Timeout-Wert für die SA-Abfrage.

## Revendications

1. Dispositif de communication (102) configuré pour fonctionner dans un réseau de communication (130, 135), le dispositif comprenant des circuits de traitement (306) couplés à une mémoire (308), les circuits de traitement étant configurés pour :
communiquer, avec un dispositif homologue (120), des trames par le biais d'une interface non contrôlée pour authentification, association, et négociation de clé (901, 903, 905, 907) ;
effectuer, avec le dispositif homologue, un établissement de liaison à 4 voies (909) ;
communiquer, avec le dispositif homologue (120), des trames de données par le biais d'une interface contrôlée après que la négociation de clé a réussi, l'interface contrôlée étant bloquée avant la négociation de clé réussie (911) ;
recevoir, en provenance du dispositif homologue (120), une indication de mode d'alimentation indiquant que le dispositif homologue entre dans un mode d'économie d'énergie ;
mettre en mémoire tampon des trames de données pour le dispositif homologue (120) en vue d'une transmission ultérieure au dispositif homologue ;
supprimer les trames de données mises en mémoire tampon pour le dispositif homologue (120) uniquement lorsqu'un état de connexion du dispositif homologue (120) passe à l'état 1 ou à l'état 2, dans lequel
l'état 1 correspond au dispositif homologue non authentifié, non associé et non sécurisé,
l'état 2 correspond au dispositif homologue authentifié mais non associé et non sécurisé,
l'état 3 correspond au dispositif homologue authentifié et associé mais non sécurisé,
l'état 4 correspond au dispositif homologue authentifié, associé et sécurisé ; et
transmettre au dispositif homologue les trames de données mises en mémoire tampon, si elles ne sont pas supprimées, uniquement par le biais de l'interface contrôlée.

2. Dispositif de communication (102) selon la revendication 1, dans lequel les circuits de traitement(306) sont en outre configurés pour :
ignorer ou désactiver une indication de mode d'alimentation dans une trame non protégée, l'indication de mode d'alimentation étant un bit de gestion d'alimentation.

3. Dispositif de communication (102) selon la revendication 2, dans lequel les circuits de traitement(306) sont en outre configurés pour :
ignorer l'indication de mode d'alimentation incluse dans une trame d'authentification non protégée, une trame de demande de (ré)association non protégée, une trame de réponse de (ré)association non protégée et une trame d'action publique.

4. Dispositif de communication (102) selon la revendication 2, dans lequel les circuits de traitement(306) sont en outre configurés pour :
déterminer l'indication de mode d'alimentation dans une trame protégée, la trame protégée comprenant une trame avec un code d'intégrité de message (MIC), un chiffrement d'en-tête MAC ou un chiffrement de corps de trame.

5. Dispositif de communication (102) selon l'une quelconque des revendications 2 à 4, dans lequel les circuits de traitement(306) sont en outre configurés pour :
ignorer une demande de récupération de mémoire tampon incluse dans une trame de gestion non protégée ou une trame de données non protégée ;
transmettre les trames de données mises en mémoire tampon lorsqu'une trame de gestion protégée ou une trame de données protégée comprenant une demande de récupération de mémoire tampon protégée est reçue.

6. Dispositif de communication (102) selon la revendication 5, dans lequel la trame de gestion protégée est protégée au moyen d'une clé dérivée de la négociation de clé réussie ou dans lequel la trame de gestion protégée comprend une trame avec un code d'intégrité de message (MIC), un chiffrement d'en-tête MAC ou un chiffrement de corps de trame.

7. Dispositif de communication (102) selon la revendication 1, dans lequel l'interface contrôlée n'est débloquée que lorsque le dispositif homologue est dans l'état 4 (911).

8. Dispositif de communication (102) selon la revendication 7, dans lequel les circuits de traitement(306) sont en outre configurés pour :
désactiver une unité MSDU qui n'est pas une unité PDU EAPOL avant d'entrer dans l'état 4.

9. Dispositif de communication (102) selon l'une quelconque des revendications 2 à 8, dans lequel les circuits de traitement(306) sont en outre configurés pour :
fournir au dispositif homologue (120) une valeur de temporisation maximale de requête d'association de sécurité (SA) dans une trame de réponse de (ré)association de sorte que le dispositif homologue puisse définir le temps de réveil pour qu'il soit inférieur à la valeur de temporisation maximale de requête SA (1001).

10. Dispositif de communication (102) selon l'une quelconque des revendications 2 à 8, dans lequel les circuits de traitement(306) sont en outre configurés pour :
recevoir une valeur de temporisation maximale de requête d'association de sécurité (SA) du dispositif homologue (120) dans une trame de demande de (ré)association (1001), et
vérifier la valeur de temporisation maximale de requête SA du dispositif homologue (120) dans un établissement de liaison à 4 voies si la temporisation maximale de requête SA fournie par le dispositif homologue n'est pas protégée (1003).

11. Dispositif de communication (102) selon l'une quelconque des revendications 2 à 10, dans lequel le dispositif de communication (102) est un point d'accès (AP) et le dispositif homologue (120) est une station non-AP (STA) ou dans lequel le dispositif de communication (102) est un dispositif AP à liaisons multiples (MLD) et le dispositif homologue (120) est un MLD non-AP.

12. Dispositif de communication (102) selon la revendication 11, dans lequel le dispositif de communication (102) est un dispositif AP à liaisons multiples (MLD) et le dispositif homologue (120) est un MLD non AP, le dispositif de communication étant en outre configuré pour :
supprimer toutes les trames mises en mémoire tampon pour chaque liaison de configuration.

13. Dispositif homologue de communication (120) configuré pour fonctionner dans un réseau de communication (130, 135), le dispositif homologue de communication comprenant des circuits de traitement (306) couplés à une mémoire (308), les circuits de traitement étant configurés pour :
communiquer, avec un dispositif (120), des trames par le biais d'une interface non contrôlée pour authentification, association, et négociation de clé (901, 903, 905, 907) ;
effectuer, avec le dispositif (120), un établissement de liaison à 4 voies (909) ;
communiquer, avec le dispositif (120), des trames de données par le biais d'une interface contrôlée après que la négociation de clé a réussi, l'interface contrôlée étant bloquée avant la négociation de clé réussie (911) ;
transmettre au dispositif (120) une indication de mode d'alimentation indiquant que le dispositif homologue (120) entre dans un mode d'économie d'énergie ; et
recevoir, en provenance du dispositif (120), des trames de données mises en mémoire tampon uniquement par le biais de l'interface contrôlée, les trames de données mises en mémoire tampon pour le dispositif de communication homologue n'étant reçues que lorsqu'un état de connexion du dispositif de communication homologue n'est pas passé à l'état 1 ou à l'état 2, dans lequel
l'état 1 correspond au dispositif homologue de communication non authentifié, non associé et non sécurisé,
l'état 2 correspond au dispositif homologue de communication authentifié mais non associé et non sécurisé,
l'état 3 correspond au dispositif homologue de communication authentifié et associé mais non sécurisé,
l'état 4 correspond au dispositif homologue de communication authentifié, associé et sécurisé.

14. Dispositif homologue de communication (120) selon la revendication 13, dans lequel l'indication de mode d'alimentation est dans une trame protégée, la trame protégée comprenant une trame avec un code d'intégrité de message (MIC), un chiffrement d'en-tête MAC ou un chiffrement de corps de trame, et
les circuits de traitement (306) sont en outre configurés pour envoyer une demande de récupération de mémoire tampon dans une trame de gestion protégée ou une trame de données protégée.

15. Dispositif homologue de communication (120) selon la revendication 13 ou 14, dans lequel les circuits de traitement (306) sont en outre configurés pour :
fournir au dispositif (120) une valeur de temporisation maximale de requête d'association de sécurité (SA) dans une trame de demande de (ré)association ;
se réveiller pour répondre à une requête SA ; et
supprimer une SA lorsque le temps de réveil du dispositif homologue de communication est supérieur à la valeur de temporisation maximale de requête SA.
